(19) Europäisches Patentamt
European Patent Office
Office européen des brevets

(11) Veröffentlichungsnummer: **0 171 021 B1**

(12) # EUROPÄISCHE PATENTSCHRIFT

(45) Veröffentlichungstag der Patentschrift: **21.07.93**

(51) Int. Cl.[5]: **C08G 75/02**

(21) Anmeldenummer: **85109541.4**

(22) Anmeldetag: **29.07.85**

Die Akte enthält technische Angaben, die nach dem Eingang der Anmeldung eingereicht wurden und die nicht in dieser Patentschrift enthalten sind.

(54) **Polyphenylensulfide, Verfahren zur Herstellung der Polyphenylensulfide und deren Verwendung.**

(30) Priorität: **20.07.85 DE 3526066**
**20.07.85 DE 3526065**
**07.08.84 DE 3428986**
**07.08.84 DE 3428985**
**07.08.84 DE 3428984**

(43) Veröffentlichungstag der Anmeldung:
**12.02.86 Patentblatt 86/07**

(45) Bekanntmachung des Hinweises auf die Patenterteilung:
**21.07.93 Patentblatt 93/29**

(84) Benannte Vertragsstaaten:
**BE DE FR GB IT NL**

(56) Entgegenhaltungen:
**EP-A- 0 126 369**
**EP-A- 0 162 210**

(73) Patentinhaber: **BAYER AG**

**W-5090 Leverkusen 1 Bayerwerk(DE)**

(72) Erfinder: **Idel, Karsten, Dr.**
**Am Schwarzkamp 38**
**W-4150 Krefeld(DE)**
Erfinder: **Willenberg, Bernd, Dr.**
**Feldstrasse 94**
**W-5060 Bergisch Gladbach 2(DE)**
Erfinder: **Reinking, Klaus, Dr.**
**Robert-Stolz-Strasse 16b**
**W-5632 Wermelskirchen(DE)**
Erfinder: **Ostlinning, Edgar, Dr.**
**Rembrandtstrasse 37**
**W-4000 Düsseldorf(DE)**
Erfinder: **Freitag, Dieter, Dr.**
**Hasenheide 10**
**W-4150 Krefeld(DE)**
Erfinder: **Alewelt, Wolfgang, Dr.**
**Bodelschwinghstrasse 32**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft gegebenenfalls verzweigte Polyarylensulfide und ein Verfahren zu ihrer Herstellung aus Alkalisulfiden und Halogenaromaten in bestimmten polaren Lösungsmitteln, wobei dem Reaktionsgemisch 0,2-100 Mol-%, bezogen auf die Dihalogenaromaten, einer Aminosäure zugegeben werden und ein weiteres Verfahren zu ihrer Herstellung aus Alkalisulfid und Halogenaromaten in bestimmten polaren organischen Lösungsmitteln, wobei 0,5 bis 100 Mol-%, bevorzugt 2 bis 50 Mol-%, bezogen auf die Mole Dihalogenaromat, Ester und/oder Anhydride von Carbonsäuren der Reaktionsmischung zugesetzt werden und ein weiteres Verfahren zu ihrer Herstellung aus Alkalisulfid und Halogenaromaten, bei dem in bestimmten polaren Lösungsmitteln, das 0,5 bis 100 Mol-%, bezogen auf die Mole Dihalogenaromat, eines Lactams enthält, die Umsetzung durchgeführt wird.

Die Erfindung betrifft weiterhin Fasern und Folien aus den neuen Polyarylensulfiden.

Polyarylensulfide und ihre Herstellung sind bekannt (s. beispielsweise US-PS 25 13 188, 31 17 620, 33 54 129, 35 24 835, 37 90 536, 38 39 301, 40 48 259, 40 38 260, 40 38 261, 40 38 262, 40 56 515, 40 60 520, 40 64 114, 42 82 347, 41 16 947, DE-AS 24 53 485, 24 35 749, DE-OS 26 23 362, 26 23 333, 29 30 797, 29 30 710, 30 19 732, 30 30 488, 31 90 538.

Eine Reihe dieser Publikationen beschreibt die Zugabe von anorganischen oder organischen Salzen zum Umsetzungsgemisch zur Erniedrigung des Schmelzflusses bzw. zur Erhöhung der Schmelzviskosität der gewonnenen Polyphenylensulfide. Erst bei ausreichend hoher Schmelzviskosität können Polyphenylensulfide thermoplastisch, z.B. zu Spritzgußteilen, Folien und Fasern verarbeitet werden. Ohne Zugabe der obengenannten Salze werden Polyphenylensulfide gewonnen, die den notwendigen geringen Schmelzfluß erst über eine separate und zusätzliche Nachkondensation bzw. Härtung (Curing) erhalten.

Als Salze wurden in den obengenannten Publikation z.B. Alkalicarboxylate (DE-AS 24 53 749), Lithiumhalogenide oder Alkalicarboxylate (DE-OS 26 23 362), Lithiumchlorid oder Lithiumcarboxylat (DE-OS 26 23 363), Alkalicarbonate in Kombination mit Alkalicarboxylaten (US-PS 40 38 259), Lithiumacetat (DE-OS 26 23 333), Trialkaliphosphate (DE-OS 29 30 710), Trialkaliphosphonate (DE-OS 29 30 797), Alkalifluoride (DE-OS 30 19 732), Alkalisulfonate (S-PS 40 38 260), Lithiumcarbonat und Lithiumborat (US-PS 40 30 518) eingesetzt.

In der DE-OS 31 20 538 (= EP-A 65 689) werden außerdem Polyarylensulfide mit hohem Schmelzviskositäten durch Zugabe von N,N- Dialkylcarbonsäureamiden zum Umsetzungsgemisch erhalten.

Die Verwendung von polaren Lösungsmitteln für die Herstellung von Polyarylensulfiden ist dort ebenfalls beschrieben.

Weiterhin sind aus den EP-A 126 369 und 162 210 Verfahren zur Herstellung hochmolekularer Polyarylensulfide bekannt. Diese können jedoch nicht mit den Parametern der neuen Polyarylensulfide beschrieben werden.

Weiterhin ist aus der US-A 3 354 129 ein Verfahren zur Herstellung von Polyarylensulfiden bekannt. Die so hergestellten Polymere müssen aber vor einer thermoplastischen Verarbeitung nachgehärtet werden.

Es wurde nun gefunden, daß in Anwesenheit einer Aminosäure, bevorzugt einer aliphatischen Aminosäure, die Reaktion in bestimmten einem polaren Lösungsmitteln, zu Polyarylensulfiden führt, die ohne thermische Nachhärtung bzw. Curing direkt thermoplastisch verarbeitbar sind.

Die erfindungsgemäßen Polyarylensulfide haben eine Schmelzviskosität $\eta_m$ von 20 bis 500 000 Pa.s und ein Gewichtsmittel des relativen Molekulargewichtes $M_w$ (rel) von 25 000 bis 580 000, dadurch gekennzeichnet, daß Schmelzviskosität $\eta_m$ und das Gewichtsmittel des relativen Molekulargewichts $M_w$ sich verhalten wie

$$\lg \eta_m = 0\ 3.48 \ .\ \lg M_w\ (\mathrm{rel}) - 14.25 \pm 0{,}1,$$

vorzugsweise, daß $\eta_m$ und $M_w$ sich verhalten wie:

$$\lg \eta_m = 3.48 \ .\ \lg M_w\ (\mathrm{rel}) - 14.25 \pm 0{,}05.$$

Die erfindungsgemäßen Polyarylensulfide besitzen direkt nach der Isolierung aus dem Reaktionsgemisch im allgemeinen Schmelzviskositäten von 0,3 x $10^3$ bis 5 x $10^6$ Pa.s; vorzugsweise von 1,5 x $10^3$ bis $10^4$ Pa.s und gute farbliche Eigenschaften. Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und

Fernmeldeeinrichtungen sowie Haushaltsgeräte, Ventile, Kugellagerteile.

Ein Gegenstand der Erfindung ist ein Verfahren zur Herstellung von gegebenenfalls verzweigten Polyarylensulfiden aus

a) 50 - 100 Mol-% Dihalogenaromaten der Formel

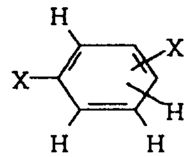

(I),

und 0 - 50 Mol-% Dihalogenaromaten der Formel

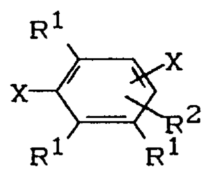

(II),

in denen

X für zueinander meta- oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist

und

b) 0 - 5 Mol-%, bevorzugt 0,1 - 2,5 Mol-%, bezogen auf die Summe der Dihalogenaromaten der Formel I und II, eines Tri- oder Tetrahalogenaromaten der Formel

$ArX_n$ (III),

wobei

Ar ein aromatischer $C_6$-$C_{14}$-Rest oder ein heterocyclischer Rest mit 5 bis 14 Ringatomen, wobei bis zu 3 Ring-C-Atome durch Heteroatome wie N, O, S ersetzt sein können, ist,

X für Halogen wie Chlor oder Brom steht und

n für die Zahl 3 oder 4 steht

und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a + b) : c im Bereich von 0,75:1 bis 1,25:1 liegen kann,

d) gegebenenfalls in Anwesenheit von Katalysatoren wie Alkalicarboxylaten, Alkaliphosphaten, Alkaliphosphonaten, Alkalifluoriden, Alkalialkylsulfonaten oder N,N-Dialkylcarbonsäureamiden,

e) in einem N-Alkyllactam von Aminosäuren mit 6 - 11-C-Atomen als polares Lösungsmittel, wobei das molare Verhält-nis von a) zu c) im Bereich von 0,75:1 bis 1,2,5:1 und c) und e) im Bereich von 1:2 bis 1:15 liegt, die Reaktionszeit bis zu 24 Stunden, vorzugsweise bis zu 18 Std. beträgt und die Reaktionstemperturen zwischen 150 und 280 °C liegen, dadurch gekennzeichnet, daß

f) die Reaktion in Anwesenheit von 0,2 bis 100 Mol-% bezogen auf die Mole Dihalogenaromat, einer Aminosäure durchgeführt wird.

Es werden dem Reaktionsgemisch 0,2 - 50 Mol-%, bevorzugt 0,2 - 25 Mol-%, bezogen auf die Mole Dihalogenaromat, einer Aminosäure zugegeben.

Es ist bekannt, daß die Zugabe von Polyhalogenaromaten, insbesondere Trihalogenaromaten als Verzweiger zur Reaktion die Schmelzviskosität der Polyarylensulfide erhöht.

Nach dem erfindungsgemäßen Verfahren können hohe Schmelzviskositäten auch ohne Einsatz von Polyhalogenaromaten erhalten werden.

Die Reaktionszeit kann bis zu 24 Stunden, vorzugsweise 2 bis 18 Stunden betragen. Die Reaktionstemperaturen betragen 150 bis 280 °C.

Die Umsetzung kann in verschiedener Weise erfolgen:

Die Alkalisulfide werden vorzugsweise in Form ihrer Hydrate und wäßrigen Mischungen oder wäßrigen Lösungen eingesetzt. Die Entwässerung kann partiell sein, erfolgt aber vorzugsweise vollständig. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt werden und die Entwässerung des Gesamtgemisches durchgeführt werden.

Vorzugsweise werden die Reaktionspartner zusammen mit erfindungsgemäß verwendbaren Aminosäuren in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so vermieden werden. Im Vergleich z.B. zum Verfahren der DE-OS 32 43 189, wo ebenfalls das Wasser aus der Reaktion entfernt wird, werden nach dem erfindungsgemäßen Verfahren farbhellere und schlagzähere Polyarylensulfide erhalten, die zusätzlich noch den Vorteil besitzen, daß sie beim Aufschmelzen weniger saure Gase abspalten und damit z.B. gegenüber Verarbeitungsmaschinen weniger korrosiv sind.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Aufarbeitung des Umsetzungsgemisches und die Isolierung der Polyarylensulfide können in bekannter Weise erfolgen.

Das Polyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die Alkalisulfide können z.B. auch aus $H_2S$ und den Alkalihydroxiden bzw. aus den Hydrogensulfiden und Alkalihydroxiden erhalten werden.

Je nach Anteil an Alkalihydrogensulfid, das als Verunreinigung im Alkalisulfid in der Reaktionslösung enthalten ist, können zusätzlich bestimmte Anteile Alkalihydroxid zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können meta- und para-Dihalogenaromaten der Formel (I) bzw. (II) eingesetzt werden. In diesem Fall kann das Verhältnis meta- zu para-Dihalogenaromaten bis zu 30:70 betragen.

Zur Erhaltung von thermoplastisch verarbeitbaren Polyphenylensulfiden werden bevorzugt p-Dihalogenaromaten eingesetzt.

Sollen verzweigte Polyarylensulfide hergestellt werden, sollten mindestens 0,05 Mol-% eines Tri- oder Tetrahalogenaromaten der Formel (III) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Di-bromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol,

1,2,3,4-Tetrachlornaphthalin, 1,2,4,5-Tetrachlorbenzol, 2,2'-4,4'-Tetrachlorbiphenyl, 1,3,5-Trichlortriazin.

Als polare Lösungsmittel für die Reaktion die eine ausreichende Löslichkeit der organischen und gegebenenfalls anorganischen Reaktanten unter den Reaktionsbedingungen gewährleisten werden
N-Alkyllactame von Aminosäuren mit 6-11 C-Atomen, die gegebenenfalls Substituenten am Kohlenstoffgerüst tragen können, die unter Reaktionsbedingungen inert sind, verwendet,
beispielsweise;
N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam,
Es können Mischungen der vorstehenden Lösungsmittel gewählt werden.

Als erfindungsgemäß einsetzbare Aminosäuren kommen bevorzugt offenkettige oder cyclische aliphatische $C_1$-$C_{20}$-Aminosäuren in Frage, die seitenständige Reste wie z.B. $C_1$-$C_4$-Alkyl-, $C_6$-$C_{14}$-Aryl- bzw. deren Kombination, $C_1$-$C_4$-Alkoxy-thio-$C_1$-$C_4$-alkylrest oder einen heterocyclischen $C_6$-$C_{14}$-Rest mit bis zu drei Heteroatomen wie N,O,S tragen können. Die Aminogruppe kann dabei als $NH_2$-, NRH- oder $NR_2$-Gruppierung vorliegen, wobei R ein beliebiger Alkylrest, bevorzugt ein $C_1$- bis $C_4$-Alkylrest, ist. Zwei Reste R können auch die beiden Enden einer Alkylenkette mit seitenständiger Carboxylgruppen sein, die zusammen mit der NH-Gruppierung einen Cyclus bildet.

Die Aminogruppen kann in $\alpha$-, $\beta$-, $\gamma$- bzw. $\omega$-Stellung fixiert sein. Es können gegebenenfalls auch Diaminosäuren bzw. Aminodicarbonsäuren eingesetzt werden.

Beispielsweise folgende Aminosäuren seien genannt:
Glycin, $\alpha$-Alanin, $\beta$-Alanin ($\alpha$- und $\beta$-Aminopropionsäure), $\alpha$-Aminobuttersäure, $\gamma$-Aminobuttersäure, $\alpha$-Amino-isovaleriansäure (Valin), $\alpha$-Amino-isocapronsäure (Leucin), $\epsilon$-Aminocapronsäure, 11-Aminoundecansäure, N-Methylaminoessigsäure (Sarkosin), N-Methyl-$\alpha$-aminopropionsäure, N-Methyl-$\beta$-aminopropionsäure, N-Methyl-$\gamma$-aminobuttersäure, N-Methyl-$\epsilon$-aminocapronsäure, N-Methyl-11-amino-undecansäure, Aminobutandisäure (Asparaginsäure), 2-Aminopentandisäure (Glutaminsäure), 2-Amino-4-methylthiobutansäure (Methionin), Phenylalanin, Prolin.

Die Reaktion kann gegebenenfalls zusätzlich in Anwesenheit von üblichen Katalysatoren wie z.B.:
Alkalicarboxylaten (DE-AS 24 53 749), Lithiumhalogeniden oder Alkalicarboxylaten (DE-OS 26 23 362), Lithiumchlorid oder Lithiumcarboxylat (DE-OS 26 23 363), Alkalicarbonaten in Kombination mit Alkalicarboxylaten (US-PS 40 389 259), Lithiumacetat (DE-OS 26 23 333), Trialkaliphosphaten (DE-OS 29 30 710), Trialkaliphosphonaten (DE-OS 29 30 797), Alkalifluoriden (DE-OS 30 19 732), Alkalisulfonaten (US-PS 40 38 260), Lithiumcarbonat und Lithiumborat (US-PS 40 30 518) durchgeführt werden.

Gegenstand der Erfindung ist ein Verfahren zur Herstellung von gegebenenfalls verzweigten Polyarylensulfiden aus

a) 50 - 100 Mol-% Dihalogenaromaten der Formel

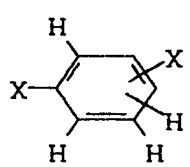

(I),

und 0 - 50 Mol-% Dihalogenaromaten der Formel

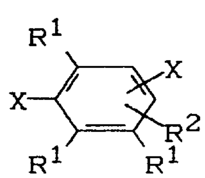

(II),

in denen

X für zueinander meta- oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist

und

b) 0 - 5 Mol-%, bevorzugt 0,1 - 2,5 Mol-%, bezogen auf die Summe der Dihalogenaromaten der Formel I und II, eines Tri- oder Tetrahalogenaromaten der Formel

$ArX_n$ (III),

wobei

Ar ein aromatischer $C_6$-$C_{14}$-Rest oder ein heterocyclischer Rest ist,

X für Halogen wie Chlor oder Brom steht und

n für die Zahl 3 oder 4 steht und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a+b):c im Bereich von 0,5:1 bis 1,5:1, bevorzugt von 0,75:1 bis 1,25:1, liegen kann, in N-Alkyllactamen von Aminosäuren mit 5 - 11 C-Atomen oder cyclischen Harnstoffen als

d) ein organisches Lösungsmittel, dadurch gekennzeichnet, daß 0,5 bis 100 Mol-%, bevorzugt 2 bis 50 Mol-%, bezogen auf Mole Dihalogenaromat der Formel I und II eines Esters oder Anhydrids einer Carbonsäure der Reaktionsmischung zugesetzt werden. Das molare Verhältnis von Alkalisulfiden c) zu dem organischen Lösungsmittel d) soll dabei im Bereich von 1:1,5 bis 1:15 liegen.

Die Reaktionszeit kann bis zu 24 Stunden betragen und liegt vorzugsweise zwischen 2 und 18 Stunden. Die Reaktionstemperaturen liegen zwischen 150 °C und 280 °C. Die Reaktionsführung kann in verschiedener Weise erfolgen.

Dabei werden hochmolekulare, gegebenenfalls verzweigte Polyarylensulfide mit erhöhter Schmelzviskosität ohne zusätzliche Härtung direkt aus der Umsetzung erhalten.

Die Alkalisulfide werden vorzugsweise in Form ihrer Hydrate und wäßrigen Mischungen oder wäßrigen Lösungen eingesetzt. Die Entwässerung kann dabei partiell oder vollständig erfolgen, wobei entweder das Alkalisulfid in einem vorgeschalteten Schritt ohne Anwesenheit der Di- und/oder Polyhalogenaromaten zunächst zusammen mit dem organischen Lösungsmittel und dem Ester bzw. Anhydrid der Carbonsäure gegebenenfalls unter Zuhilfenahme eines Azeotropbildners bzw. Wasserschleppers wie z.B. Toluol, oder das gesamte Reaktionsgemisch direkt entwässert wird, und dabei z.B. die Di- und Polyhalogenaromaten als Azeotropbildner dienen können.

Wird nur partiell entwässert, so sollte unter Druck gearbeitet werden, um die nötigen Reaktionstemperaturen zu erreichen. Die Alkalisulfide können auch für sich alleine separat durch Anlegen von Temperatur und Vakuum getrocknet und dem Reaktionsgemisch zugegeben werden.

Wird völlig entwässert, was vorzugsweise in Anwesenheit aller Reaktionspartner und mit dem Di- und Polyhalogenaromaten als Wasserschlepper durchgeführt werden kann, so kann druckfrei bzw. druckarm umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Zugabe der Reaktionspartner kann in mehrfacher Weise erfolgen.

Es können alle Reaktionspartner direkt zusammengegeben werden, oder eine kontinuierliche bzw. dosierte Zugabe eines oder mehrerer Reaktionspartner durchgeführt werden.

Die Aufarbeitung des Umsetzungsgemisches und die Isolierung der Polyarylensulfide kann in bekannter Weise erfolgen.

Das Polyarylensulfdid kann direkt aus der Reaktionslösung oder erst z.B. nach Zugabe von Wasser und/oder verdünnten Säuren oder organischen Lösungsmitteln, vorzugsweise solchen mit geringer Löslichkeit für Polyarylensulfide, nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die im Sinne der Erfindung eingesetzten Ester und Anhydride können Ester und Anhydride von aliphatischen oder aromatischen Mono-, Di- und Polycarbonsäuren sein. Die $C_2$-$C_{12}$-aliphatischen oder $C_5$-$C_7$-cycloaliphatischen oder $C_6$-$C_{14}$-aromatischen Mono-, Di- und Polycarbonsäurereste können Substituenten wie z.B. $C_6$-$C_{12}$-Aryl-, $C_1$-$C_4$-Alkyl-, $C_5$-$C_{10}$-Aryloxy-, $C_1$-$C_4$-Alkoxy-, $C_5$-$C_{10}$-Cycloalkoxy-Reste tragen.

Die Anhydride und Ester können intra- oder intermolekular vorliegen. Es sind auch z.B. gemischte Anhydride einsetzbar. Der Alkoholrest der Ester hat die Formel $-OR_2$, wobei $R_2$ ein $C_1$- bis $C_{18}$-Alkyl-, $C_5$-

$C_{10}$-Cycloalkyl- oder $C_7$-$C_{19}$-Alkylarylrest ist.

Beispiele für geeignete Ester sind: Methylacetat, Ethylacetat, n-Propylacetat, n-Butylacetat, n-Amylacetat, Iso-butylacetat, t-Butylacetat, Isoamylacetat, Methylpropionat, Ethylpropionat, Methyl-n-butyrat, Ethyl-n-butyrat, n-Propylbutyrat, Isoamyl-n-butyrat, Methyl-n-valerat, Ethyl-n-valerat, Methyl-isovalerat, Ethyl-isovalerat, Ethyl-n-heptanolat, Ethylpelargonat, Methylbenzoat, Ethylbenzoat, n-Propylbenzoat, n-Butylbenzoat, Diethylphthalat, Dimethyloxalat, Diethoxalat, Dimethylmalonat, Cyclohexancarbonsäuremethylester, Cyclohexancarbonsäureethylester.

Beispiele für Carbonsäureanhydride sind Essigsäureanhydrid, Propionsäureanhydrid, n-Buttersäuranhydrid, n-Valerian-säureanhydrid, Bernsteinsäureanhydrid, Glutarsäureanhydrid, Benzoesäureanhydrid, Cyclohexancarbonsäureanhydrid, Phthalsäuranhydrid.

Es können Mischungen von Estern, Mischungen von Anhydriden und Mischungen von Estern mit Anhydriden verwendet werden.

Als Alkalisulfide sind z.B. Natrium- und Kaliumsulfid geeignet. Die Alkalisulfide können auch aus $H_2S$ und den Alkalihydroxiden bzw. aus den Hydrogensulfiden und Alkalihydroxiden erhalten werden.

Je nach Anteil von Alkalihydrogensulfid in der Reaktionslösung, das z.B. als Verunreinigung im Alkalisulfid enthalten sein kann oder während des Reaktionsprozesses entsteht, kann zusätzlich Alkalihydroxid zur Regenerierung von Alkalisulfid zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgmeäß können meta- und para-Dihalogenaromaten der Formel (I) bzw. (II) eingesetzt werden. In diesem Fall kann das Verhältnis meta- zu para-Dihalogenaromaten bis zu 30:70 betragen.

Zur Erhaltung von thermoplastisch verarbeitbaren Polyphenylensulfiden werden bevorzugt p-Dihalogenaromaten eingesetzt.

Sollen verzweigte Polyarylensulfide hergestellt werden, müssen mindestens 0,05 Mol-% eines Tri- oder Tetrahalogenaromaten der Formel (III) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol, 1-Chlor-3-brombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Als polare Lösungsmittel für die Reaktion werden cyclische Harnstoffe und N-Alkyllactame wie oben definiert verwendet.

Beispielsweise kommen als Lösungsmittel in Frage:
N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam,
Es können auch Mischungen der vorstehenden Lösungsmittel gewählt werden.

Die Erfindung betrifft ein weiteres Verfahren zur Herstellung von hochmolekularen, gegebenenfalls verzweigten Polyarylensulfiden aus Alkalisulfid und Halogenaromaten, bei dem in einem polaren Lösungsmittel, wie einem N-Alkyllactam, wie jeweils nachstehend spezifiziert das 0,5 bis 100 Mol-%, bezogen auf die Mole Dihalogenaromat eines Lactams enthält, die Umsetzung durchgeführt wird.

In der DE-OS 31 20 538 (= EP-A 65 689) wird außerdem beschrieben, daß Polyarylensulfide mit hohen Schmelzviskositäten durch Zugabe von N,N-Dialkylcarbonsäureamiden erhalten werden.

Die Verwendung von polaren Lösungsmitteln für die Herstellung von Polyarylensulfiden ist bekannt und in den o.g. Publikationen beschrieben.

Es werden auch Lactame als Lösungsmittel genannt. Es werden jedoch bei Einsatz von Lactamen als Lösungsmittel wie z.B. Pyrrolidon und ε-Caprolactam nur p-Polyphenylensulfide mit unbefriedigenden Eigenschaften, d.h. zu hohem Schmelzfluß bzw. zu niedriger Schmelzviskosität erhalten, die nicht ohne thermische Nachhärtung thermoplastisch verarbeitet werden können.

Es wurde nun gefunden, daß in Anwesenheit kleiner Mengen Lactam im Umsetzungsgemisch Polyarylensulfide mit hohen Schmelzviskositäten erhalten werden, die direkt ohne eine seperate thermische Nachhärtung bzw. ein Curing thermoplastisch verarbeitet werden können.

Im Vergleich zu den bekannten Verfahren, die reine N-Alkyllactame als Lösungsmittel verwenden, werden bei dem erfindungsgemäßen Verfahren Produkte mit höheren Schmelzviskositäten erhalten, wenn die Reaktion erfindungsgemäß in dem polaren Lösungsmittel, besonders bevorzugt dem N-Alkyllactam, durchgeführt wird, das 0,5 bis 100 Mol-%, bezogen auf die Mole Dihalogenaromat, eines Lactams enthält.

Es ist bekannt, daß die Zugabe von Polyhalogenaromaten, insbesondere Trihalogenaromaten als Verzweiger, die Schmelzviskosität der Polyarylensulfide erhöht.

Nach dem erfindungsgemäßen Verfahren können Polyarylensulfide mit hohen Schmelzviskositäten ohne Einsatz von Polyhalogenaromaten erhalten werden.

Die Erfindung betrifft ein Verfahren zur Herstellung von gegebenenfalls verzweigten Polyarylensulfiden aus

a) 50 - 100 Mol-% Dihalogenaromaten der Formel

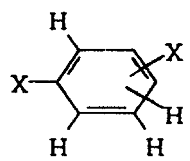

(I),

und 0 - 50 Mol-% Dihalogenaromaten der Formel

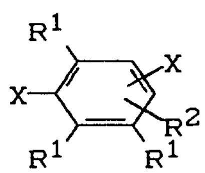

(II),

in denen

X für zueinander meta- oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{19}$-Alkylaryl, $C_7$-$C_{19}$-Arylalkyl sein kann, wobei zwei zueinander orthoständige Reste $R^1$ zu einem aromatischen oder heterocyclischen mit bis zu drei Heteroatomen wie N, O, S enthaltenden Ring verknüpft sein können und immer ein Rest $R^1$ verschieden von Wasserstoff ist

und

b) 0 - 5 Mol-%, bevorzugt 0,1 - 2,5 Mol-%, bezogen auf die Summe der Dihalogenaromaten der Formel I und II, eines Tri- oder Tetrahalogenaromaten der Formel

$ArX_n$ (III),

wobei

Ar ein aromatischer oder ein heterocyclischer Rest ist,

X für Halogen wie Chlor oder Brom steht und

n für die Zahl 3 oder 4 steht

und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a + b) : c im Bereich von 0,75:1 bis 1,25:1 liegen kann,

d) gegebenenfalls in Anwesenheit von bekannten Katalysatoren, z.B. Alkalicarboxylaten, Alkaliphosphaten, Alkaliphosphonaten, Alkalifluoriden, Alkalialkylsulfonaten oder N,N-Dialkylcarbonsäureamiden, (DE-OS 31 90 538),

e) dadurch gekennzeichnet, daß die Reaktion in einem N-Alkyllactam von Aminosäuren mit 6 bis 11 C-Atomen oder cyclischem Harnstoff als polares Lösungsmittel, das 0,5 bis 100 Mol- %, bezogen auf die

Mole Dihalogenaromat eines Lactams enthält, durchgeführt wird.

Die Umsetzungszeit kann bis zu 24 Stunden betragen, vorzugsweise 2 bis 18 Stunden. Die Umsetzungstemperaturen betragen 150 °C bis 280 °C.

Die Reaktionsführung kann in verschiedener Weise erfolgen:

Die Alkalisulfide werden vorzugsweise in Form ihrer Hydrate und wäßrigen Mischungen oder wäßrigen Lösungen eingesetzt.Die Entwässerung kann dabei partiell oder vollständig erfolgen, wobei entweder das Alkalisulfid in einem vorgeschalteten Schritt ohne Anwesenheit der Di- und/oder Polyhalogenaromaten zunächst zusammen mit dem organischen Lösungsmittel und dem Lactam gegebenenfalls unter Verwendung eines Azeotropfbildners bzw. Wasserschleppers entwässert wird. Das gesamte Reaktionsgemisch kann auch so entwässert werden, daß die Di- und Polyhalogenaromaten als Azeotropbildner verwendet werden.

Wird nur partiell entwässert, so sollte unter Druck gearbeitet werden, um die nötigen Reaktionstemperaturen zu erreichen. Die Alkalisulfide können für sich alleine separat durch Anlegen von Wasser und Vakuum getrocknet und dem Reaktionsgemisch zugegeben werden. Der Druck kann je nach Stickstoffvordruck bis zu 100 bar betragen, im allgemeinen 2 bis 20 bar.

Wird völlig entwässert, was vorzugsweise in Anwesenheit aller Reaktionspartner und mit dem Di- und Polyhalogenaromaten als Wasserschlepper durchgeführt wird, so kann druckfrei bzw. druckarm bis zu etwa 3 bar umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Für das erfindungsgemäße Verfahren werden vorzugsweise die vollständige Entwässerung aller wasserhaltigen Reaktionspartner empfohlen.

Die Zugabe der Reaktionspartner kann in mehrfacher Weise erfolgen.

Es können alle Reaktionspartner direkt zusammengegeben werden, oder vorzugsweise eine kontinuierliche Zugabe eines oder mehrerer Reaktionspartner durchgeführt werden, wobei gleichzeitig die Entwässerung durchgeführt werden kann. Auf diese Weise kann der Ablauf der Reaktion gesteuert und die Verweilzeit des Wassers im Reaktionsgemisch niedrig gehalten werden.

Im Vergleich z.B. zum Verfahren der DE-OS 3 243 185, wo ebenfalls das Wasser aus der Reaktion entfernt wird, werden nach dem erfindungsgemäßen Verfahren farbhellere und schlagzähere Polyarylensulfide erhalten, die beim Aufschmelzen weniger Gase abspalten und damit weniger korrosiv sind.

Die Aufarbeitung des Umsetzungsgemisches und die Isolierung der Polyarylensulfide kann in bekannter Weise erfolgen.

Das Polyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser ran. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Als Alkalisulfide sind z.B. Natrium- und Kaliumsulfid geeignet. Die Alkalisulfide können auch aus $H_2S$ und den Alkalihydroxiden bzw. aus den Hydrogensulfiden und Alkalihydroxiden erhalten werden.

Je nach Anteil von Alkalihydrogensulfid in der Reaktionslösung, das als Verunreinigung im Alkalisulfid enthalten ist, können zusätzlich bestimmte Anteile Alkalihydroxid zudosiert werden. Gegebenenfalls können auch anstelle der Alkalihydroxide solche Verbindungen zugegeben werden, die unter den Reaktionsbedinungen Alkalihydroxide abspalten bzw. bilden.

Erfindungsgemäß können meta- und para-Dihalogenaromaten der Formel (I) bzw. (II) eingesetzt werden. Das Verhältnis meta- zu para-Dihalogenaromaten kann bis zu 30:70 betragen.

Zur Erhaltung von thermoplastisch verarbeitbaren Polyphenylensulfiden werden besonders bevorzugt p-Dihalogenaromaten eingesetzt.

Sollen verzweigte Polyarylensulfide hergestellt werden, sollten mindestens 0,05 Mol-% eines Tri- oder Tetrahalogenaromaten der Formel (III) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbnezol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden jedoch cyclische Harnstoffe und besonders bevorzugt N-Alkyllactame verwendet.

Beispielsweise finden als anspruchsgemäße N-Alkyllactame Verwendung:
N-Methylcaprolactam, N-Ethylcaprolactam, N-Isopropylcaprolactam, N-Isobutylcaprolactam, N-Propylcaprolactam, N-Butylcaprolactam, N-Cyclohexyl-caprolactam,
Es können auch Mischungen der vorstehenden Lösungsmittel gewählt werden.

Lactame im Sinne der vorliegenden Erfindung sind Lactame von Aminosäuren mit 3 bis 15 C-Atomen, die gegebenenfalls Substituenten am Kohlenstoffgerüst tragen können, die unter Reaktionsbedingungen inert sind.

Bevorzugt sind aliphatische Lactame, die auch aromatische Reste haben können, Beispielsweise können folgende Lactame, gegebenenfalls Mischungen davon, Verwendung finden:
Pyrrolidon-(2), ($\gamma$-Butyrolactam), 5-Methylpyrrolidon-(2), 5-Ethyl-pyrrolidon-(2), Piperidon-(2), ($\delta$-Valerolactam), 6-Methyl-piperidon-(2), 6-Cyclohexyl-piperidon-(2), $\epsilon$-Caprolactam, $\omega$-Amino-önanthsäurelactam, $\omega$-Aminocaprylsäurelactam, $\omega$-Aminolaurinsäurelactam, $\omega$-Aminohexadekansäurelactam, 1-Methyl-homopiperazinon-(5), 5-Ethoxy-pyrrolidon-(2), 5-Benzyl-pyrrolidon-(2), 5,5-Dimethyl-6-methoxy-piperidon-(2).

Die erfindungsgemäßen Polyarylensulfide können mit anderen Polymeren, wie Pigmenten und Füllstoffen, beispielsweise Graphit, Metallpulver, Glaspulver, Quarzmehl, Glasfasern oder Kohlefasern gemischt und mit den für Polyarylensulfide übliche Additiven, beispielsweise üblichen Stabilisatoren oder Entformungsmitteln, versetzt werden.

Im allgemeinen wird das Schmelzfließverhalten von Polyarylensulfiden nach ASTM 1238-70 bei 316 °C unter Verwendung eines 5 kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta_m$ der Polymerschmelze (in Pa.s) bei 306 °C in Abhängigkeit von der Schubspannung $\tau$ (in Pa) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron; Durchmesser des Kegels und der Platte 2 cm.

Angegeben wird die Schmelzviskosität, die bei einer Schubspannung von $\tau = 10^2$ Pa gemessen wird.

Ebenso können Polyarylensulfide über chromatografische Verfahren analysiert werden, um Aussagen über Molekulargewicht und Molekulargewichtsverteilung zu machen, Hierfür sind z.B. Hochdruckflüssigkeitschromatographie (HPLC) oder Gelpermeationschromatografie (GPC) geeignet.

Als stationäre Phase können übliche Trägermaterialien verwendet werden, z.B. Li-Chroprep®, Lobar®, LiChrosorb®, LiChrospher®, Perisorb®, Hibar®, Fractogel®, Fractosil®, Ultrastyragel®, Microstyragel®, Zorbax®, Bondagel® und Shodex®.

Als Lösungsmittel und Laufmittel können übliche Lösungsmittel verwendet werden. Diese sollten das Polymere ausreichend lösen. Z.B. sind 1-Chlornaphthalin, Diphenyl, N-Methylpyrrolidon, N-Cyclohexylpyrrolidon, N-Methyl-piperidon, N-Methylcaprolactam, N-Methyllaurinlactam, Sulfolan, N,N'-Dimethylimidazolidinon, N,N'-Dimethylpiperazinon, Hexamethylphosphorsäuretriamid, 1-Methyl-1-oxa-phospholan und deren Mischungen geeignet.

Bei den chromatographischen Analysenmethoden können absolute oder relative Eichungen durchgeführt werden. Als Eichsubstanzen für relative eignen sich beispielsweise übliche Polymere wie z.B. Polystyrol, Polyethylen, Polyethylenterephthalat, Polybutylenterephthalat, Polyester, wie rein aromatische Polyester, Polycarbonat, Polyamide, wie PA 6, PA 66, PA 11, Polysulfone oder Polyethersulfone.

Die Chromatographie zur analytischen Bestimmung der Molekulargewichte, bzw. Molekulargewichtsverteilung kann bei verschiedenen Drücken von 1 bis 10 bar durchgeführt werden.

Die chromatograpfische Bestimmung wird bei einer Temperatur von Raumtemperatur bis 250 °C durchgeführt.

Weiterhin können zur Verbesserung der Meßgenauigkeit der zu analysierenden Probe Substanzen wie Alkalihalogenide, Erdalkalicarboxylate, Phosphonium- oder Ammoniumverbindungen zugesetzt werden.

Bei der Auswertung der so ermittelten Analysendaten können die gewichtsgemittelten Molekulargewichte $M_w$ angegeben werden. Diese betragen 25 000 bis 500 000, vorzugsweise 25 000 bis 380 000, besonders bevorzugt 25 000 bis 300 000, ganz besonders bevorzugt 25 000 bis 150 000.

Nach den erfindungsgemäßen Verfahren wird ein Polyarylensulfid mit einer Schmelzviskosität $\eta_m$ von 20 bis 500 000 Pa.s und einem Gewichtsmittel des relativen Molekulargewichts $M_w$ (rel) von 25 000 bis 380 000 erhalten, dadurch gekennzeichnet, daß Schmelzviskosität $\eta_m$ und das Gewichtsmittel des relativen Molekulargewichts $M_w$ sich verhalten wie

$$\lg \eta_m = 3.48 \,.\, \lg M_w\,(\text{rel}) - 14.25 \pm 0{,}1,$$

vorzugsweise daß $\eta_m$ und $M_w$ sich verhalten wie:

$$\lg \eta_m = 3.48 \,.\, \lg M_w\,(\text{rel}) - 14.25 \pm 0{,}05.$$

Die erfindungsgemäßen Polyarylensulfide, vorzugsweise die p-Polyarylensulfide besitzen direkt nach der Isolierung aus dem Reaktionsgemisch im allgemeinen Schmelzviskositäten von 0,3 x $10^3$ bis 5 x $10^6$ Pa.s, vorzugsweise von 1,5 x $10^3$ bis $10^4$ Pa.s und gute farbliche Eigenschaften. Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile.

Die Erfindung betrifft Mono- und biaxial verstreckbare Folien aus den neuen Polyphenylensulfiden.

Folien aus Polyphenylensulfid sind z. B. aus DE-OS 3 107 562, DE-OS 2 916 841, US 4 102 954, US 4 251 575, JP 597 020, JP 58 201 617, JP 58 208 019, JP 58 205 733, JP 58 067 733, JP 57 187 327, JP 56 062 126, JP 57 205 119, JP 56 062 128, JP 56 062 127, JP 57 205 118, JP 56 034 426, JP 56 062 121, JP 55 034 967, JP 57 121 052 bekannt.

Die Herstellung dieser Folien erfolgt durch mono- und biaxiale Verstreckung zuvor extrudierter unverstreckter Folien, wobei durch Abschrecken der Schmelzen auf gekühlten Walzen oder in flüssigen Kühlmedien dafür gesorgt wird, daß primär amorphe Folien erhalten werden. Die Verstreckung wird bei Temperaturen zwischen 80 und 150 °C durchgeführt. An die Verstreckung der Folien schließt sich dann eine Thermofixierung an, d. h. die verstreckten Folien werden im noch eingespannten Zustand einer ein- oder mehrstufigen Wärmebehandlung unterworfen, wobei sie gegebenenfalls bis zur Schmelztemperatur des Polyarylensulfides erhitzt werden. Ziel der Thermofixierung ist, ein Schrumpfen der entspannten Folien bei späterer thermischer Belastung zu verhindern.

Tatsächlich gelingt es so, dieses Schrumpfen (heat shrinkage) auf Werte unter 1 % zu reduzieren. Die bisher bekannten Folien weisen jedoch nur begrenzte Festigkeiten auf und können zudem unter mechanischer Belastung noch irreversibel verformt werden, d. h. ihre Verformung unter maximal möglicher Spannung ist noch sehr hoch.

Ursache dieses Verhaltens ist, daß unter den obengenannten Bedingungen der Verstreckvorgang nicht zu einer Erhöhung der Festigkeit der Folien führt. Diese ist nur dann zu erwarten, wenn die Verstreckung unter Bedingungen erfolgt, unter denen im Zugspannung/Dehnung-Diagramm ein Zugspannungsmaximum (yield point) auftritt. Dies ist nur bei Temperaturen unterhalb der Glastemperatur des Polymeren der Fall. Oberhalb der Glastemperatur des Polymeren ist ein Zugspannungsmaximum im Zugspannungs/Dehnung-Diagramm nicht mehr zu erkennen.

Bezogen auf Folien aus Polyphenylensulfid bedeutet das, daß die Verstreckung unterhalb von 80 - 90 °C erfolgen muß, um im Endergebnis mono- oder biaxial verstreckte Folien maximaler Festigkeit zu erhalten.

Die bekannten Folien aus Polyarylensulfiden können jedoch nicht unterhalb dieser Temperatur verstreckt werden, ohne bei der Verstreckung zu reißen.

Es wurde nun gefunden, daß Folien aus einem Polyphenylensulfid, dessen Gewichtsmittel des realtiven Molekulargewichts $M_w$ (rel) von 25 000 bis 500 000 und dessen Schmelzviskosität $\eta_m$ bestimmte Bedingungen erfüllen, deutlich vorteilhaftere Eigenschaften besitzen.

Ein weiterer Gegenstand der Erfindung sind daher Folien aus Polyarylensulfiden, dadurch gekennzeichnet, daß ein Polyarylensulfid mit einer Schmelzviskosität $\eta_m$ von 20 bis 5 000 Pa.s und einem Gewichtsmittel des relativen Molekulargewichtes $M_w$ (rel) von 25 000 bis 500 000 verwendet wird, dessen Schmelzviskosität $\eta_m$ und dessen Gewichtsmittel des relativen Molekulargewichts $M_w$ sich verhalten wie

$$\lg \eta_m = 3.48 . \lg M_w \text{ (rel)} - 14.25 \pm 0{,}1,$$

vorzugsweise daß $\eta_m$ und $M_w$ sich verhalten wie:

$$\lg \eta_m = 3.48 . \lg M_w \text{ (rel)} - 14.25 \pm 0{,}05.$$

Der besondere Vorteil der erfindungsgemäßen geeigneten Polyarylensulfide ist nun, daß sie die Herstellung von Folien ermöglichen, die unterhalb der Glastemperatur mono- und biaxial verstreckt werden können. Es ist daher möglich, durch mono und biaxiale Verstreckung aus den erfindungsgemäßen Polyarylensulfiden Folien mit überlegener mechanischer Festigkeit, die sich bis zur maximalen mechanischen Belastbarkeit kaum noch verformen, herzustellen.

Diese Eigenschaft ist von wesentlicher Bedeutung für die wichtigsten Anwendung der erfindungsgemäßen Polyarylensulfidfolien, z. B. als Elektroisolierfolien, Trägerfolien magnetischer Speichermaterialien oder flexibler gedruckter Schaltungen.

Kennzeichnend für die erfindungsgemäßen mono- und biaxial verstreckten Folien aus den geeigneten Polyarylensulfiden ist daher, daß die mono- und biaxiale Verstreckung unterhalb der Glastemperaturen durchgeführt wird.

Bevorzugt werden p-Dihalogenaromaten eingesetzt um thermoplastisch verarbeitbare Polyphenylensulfide zu erhalten.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1.3-Dibrombenzol und 1-Chlor-3-brombenzol. Sie sind allein oder im Gemisch miteinander verwendbar. Bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Die Schmelzviskosität beträgt bei 306 °C und einer Schubspannung von $10^2$ Pa 50 - 5 000 Pa.s, bevorzugt 100 -3 000 Pa.s; dabei wird die Viskosität mit einem Instron-Rheometer 3250, das mit einem Kegel-Platte-System mit einem Durchmesser von 20 mm ausgerüstet ist, gemessen.

Die Chromatographie zur analytischen Bestimmung der Molekulargewichte bzw. Molekulargewichtsverteilung kann bei verschiedenen Drücken von 1 - 10 bar durchgeführt werden.

Die chromatographische Bestimmung wird bei einer Temperatur von Raumtemperatur bis 250 °C durchgeführt.

Weiterhin können zur Verbesserung der Meßgenauigkeit der zu analysierenden Probe Substanzen wie Alkalihalogenide, Erdalkalicarboxylate, Phosphonium- oder Ammoniumverbindungen zugesetzt werden.

Die Schmelzviskositäten $\eta_m$ der Polymerschmelze werden bei 306 °C in Abhängigkeit von der Schubspannung (in Pa gemessen) mit Hilfe eines Instron-Rotationsviskosimeters bestimmt. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Man kann auf diese Weise die Schmelzviskosität in einem sehr weiten Bereich von $10^{-1}$ bis $10^7$ Pa.s bestimmen. Diese Methode hat Vorteile gegenüber der Messung des Schmelzfließverhaltens nach ASTM 12378 - 70, da bei hohen Schmelzfließwerten die hohen Ausflußraten nur sehr schwer meßbar sind.

Die Extrusion des erfindungsgemäß geeigneten Polyarylensulfides zu Folien erfolgt nach üblichen Extrusionsverfahren, beispielsweise unter Verwendung einer sogenannten Breitschlitzdüse. Die Verarbeitungstemperatur liegt 5 bis 100 °C, bevorzugt 10 bis 50 °C, oberhalb des Schmelzpunktes der Polymeren.

Dabei wird die aus der Düse austretende Schmelze auf eine rotierende, auf maximal 60 °C erwärmte Walze geleitet, wo sie so rasch auf Temperaturen unterhalb der Kristallisationstemperatur der erfindungsgemäß geeigneten Polyarylensulfide abgekühlt wird, daß amorphe Folien entstehen können.

Anschließend können diese Folien in festem Zustand verstreckt werden. Diese Verstreckung kann bei Raumtemperatur, bevorzugt bei erhöhten Temperaturen erfolgen.

Die Verstreckung sollte vorzugsweise unter Ausbildung einer deutlich erkennbaren Einschnürung stattfinden, so daß die resultierenden mono- oder biaxial verstreckten Folien ihre überlegene Festigkeit erlangen können.

Eine Ausbildung einer Einschnürung während der Verstreckung kann vorzugsweise beobachtet werden wenn die Temperatur, bei der die Verstreckung durchgeführt wird, vorzugsweise unterhalb der Glastemperatur des Polyarylensulfids liegt.

Der Verstreckvorgang kann weiterhin durch die Verstreckgeschwindigkeit beeinflußt werden. Bei zu hoher Verstreckgeschwindigkeit könnte die Folie reißen. Die maximal erreichbare Verstreckgeschwindigkeit kann um so höher sein, je höher die Temperatur der Folie während der Verstreckung ist.

Im Sinne einer möglichst wirtschaftlichen Herstellung mono- und biaxial verstreckter Folien aus Polyarylensulfid wird die Verstreckung daher bei Temperaturen dicht unterhalb der Glastemperatur des erfindungsgemäß geeigneten Polyarylensulfids durchgeführt.

Während der Verstreckung kann das Polyarylensulfid bereits kristallisieren, was dann an der Trübung der zuvor transparenten Folie erkannbar ist. Um die Kristallisation zu vollenden, kann es vorteilhaft sein, im Anschluß an die mono- oder biaxiale Verstreckung eine Temperung der noch eingespannten Folie durchzuführen. Die dazu erforderlichen Temperaturen betragen 130 bis 280 °C, bevorzugt 200 bis 260 °C. Die Dauer der Temperung liegt zwischen 5 Minuten und 2 Stunden, bevorzugt zwischen 10 und 30 Minuten.

Ein weiterer Gegenstand der Erfindung sind Fasern und Filamente aus den neuen Polyarylensulfiden.

Aus Polyphenylensulfiden Fasern und Filamente herzustellen ist bekannt, z.B. aus US-PS 3 895 091, US-PS 3 898 204, US-PS 3 912 695, US-PS 4 029 639, US-PS 4 115 562, wobei jedoch das Polyarylensulfid vor der Verarbeitung mindestens teilweise einem Härtungsprozeß (Curing) unterworfen werden muß.

Aus den US-PS 4 098 776, US-PS 4 115 562 ist z.B. bekannt, daß die gewünschten Eigenschaften der Fasern bzw. der daraus hergestellten Flächengebilde durch eine thermische Behandlung der Fasern erzielt werden kann.

Die DE-A-3 030 488 beschreibt die Herstellung von Fasern aus vernetztem Polyphenylensulfid. Die US-PS 4 418 029 beschreibt z.B. Verfahren zur Verbesserung des Schmelzspinnprozesses von Polyarylensulfiden durch Stabilisatoren, die die Gelbildung während der Faserherstellung reduzieren. Aus der EP-A 102 536 ist ein Verfahren zur Verbesserung des Schmelzspinnprozesses von Polyarylensulfiden mittels mehrstufiger Schmelzefiltration bekannt.

Weiterhin sind Fasern aus Polyarylensulfiden bekannt, bei denen das Harz vor der Verspinnung nicht einem Härtungsprozeß (Curing) unterworfen werden muß, das verwendete Polyphenylsulfid jedoch gegebenenfalls durch Verwendung trifunktioneller Comonomerer verzweigt bzw. vernetzt werden muß, z.B. JP-PS 57 143 518; 58 018 409; 58 031 112; 59 059 917, 59 059 918.

Die EP-A-056 418 beschreibt die Herstellung von Filamentspinnvliesen aus Poylphenylensulfid mit einem bestimmten Verzweigungsgrad.

Es wurde nun gefunden, daß Fasern und Filamente aus Polyarylensulfiden dann ein besonders günstiges Eigenschaftsprofil aufweisen, wenn das Gewichtsmittel des relativen Molekulargewichts $M_w$ (rel) und die Schmelzviskosität $\eta_m$ bestimmte Bedingungen erfüllen.

Ein weiterer Gegenstand der Erfindung sind daher Fasern und Filamente aus Polyarylensulfid, dadurch gekennzeichnet, daß das Gewichtsmittel des relativen Molekulargewichts $M_w$ 25 000 bis 500 000 und die Schmelzviskosität $\eta_m$ zum Gewichtsmittel des relativen Molekulargewichtes $M_w$ (rel) sich verhält wie

$$\lg \eta_m = 3.48 \times \lg M_w \text{ (rel)} - 14{,}25 \pm 0{,}1,$$

vorzugsweise

$$\lg \eta_m = 3.48 \times \lg M_w \text{ (rel)} - 14{,}25 \pm 0{,}05.$$

Bevorzugt werden p-Dihalogenaromaten eingesetzt, um thermoplastisch verarbeitbare Polyphenylensulfide zu erhalten.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1.3-Dibrombenzol und 1-Chlor-3-brombenzol. Sie sind allein oder im Gemisch miteinander verwendbar. Bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Die Schmelzviskosität beträgt bei 306 °C und einer Schubspannung von $10^2$ Pa 50 - 5 000 Pa.s, bevorzugt 100 - 3000 Pa.s; dabei wird die Viskosität mit einem Instron-Rheometer 3250, das mit einem Kegel-Platte-System mit einem Durchmesser von 20 mm ausgerüstet ist, gemessen.

Die Verspinnung des erfindungsgemäßen Polyarylensulfides erfolgt nach üblichen Schmelzspinnverfahren und stellt im allgemeinen keinerlei spezielle Anforderungen. Die Verarbeitungstemperatur liegt 5-100 °C oberhalb des Schmelzpunktes des Polymeren, bevorzugt 10-50 °C oberhalb des Schmelzpunktes des Polymeren.

Anschließend wird das Spinngut in festem Zustand verstreckt. Diese Verstreckung erfolgt bei Raumtemperatur, bevorzugt bei erhöhten Temperaturen, stets jedoch unterhalb des Schmelzpunktes des Polymeren, besonders bevorzugt in enem Temperaturbereich zwischen 70 °C und 150 °C. Dabei können vorzugsweise Gesamtstreckgrade von 4 bis 10 erreicht werden.

Die Verstreckung kann dabei beispielsweise in Luft, Wasser oder anderen Wärmeträgern oder auf Kontaktheizern erfolgen.

Die Verstreckung kann einstufig oder mehrstufig durchgeführt werden.

Vorzugsweise kann sich an den Streckprozeß z.B. zur Verbesserung der thermischen Eigenschaften, insbesondere der Reduktion von Koch- und Thermoschrumpf, ein Fixierprozeß anschließen.

Der Fixierprozeß kann kontinuierlich oder diskontinuierlich, vorzugsweise kontinuierlich erfolgen.

Der Fixierprozeß kann unter Spannung oder spannungslos, vorzugsweise unter Spannung durchgeführt werden bei Temperaturen, die unterhalb des Schmelzpunktes des Polyarylensulfides liegen, vorzugsweise bis zu 100 °C, besonders bevorzugt bis 50 °C unterhalb des Schmelzpunktes. die Verweilzeiten liegen dabei von 1 Sekunde bis 10 Minuten, bevorzugt von 10 Sekunden bis 200 Sekunden.

Bei diesem Fixierprozeß können Fasern mit einem hohen Kristallinitätsgrad hergestellt werden.

Die erfindungsgemäßen Fasern zeichnen sich aus durch ihre problemlose Herstellbarkeit, ein Härtungsprozeß (Curing) des zu verspinnenden Polyphenylensulfids kann entfallen. Der Einsatz trifunktioneller Verzweiger ist bei den erfindungsgemäß zur Faserherstellung verwendeten Polyarylensulfiden im allgemeinen ebenfalls nicht erforderlich. Es werden keine Stabilisatoren benötigt, die das Nachhärten während des Verspinnens, welches zur Bildung von Gelteilchen führen kann, verhindern. Ebenso sind spezielle Filtrationsverfahren nicht erforderlich: zur Verhinderung von Filamentgarnbrüchen beim Spinnen und Strecken sind übliche Düsenfilter mit Lochdurchmesser zwischen 40 - 20 µm ausreichend.

Ein weiterer Vorteil des erfindungsgemäßen Verfahrens ist, daß bei der Verarbeitung der Polymeren keinerlei Ausgasungen beobachtet werden, und das Spinngut vakuolenfrei ist.

Die Verspinnung erfolgt nach üblicher Schmelzspinntechnik und erfoldert keinerlei spezielle Vorkehrungen, insbesondere sind alle gebräuchlichen Fadenleitorgane einsetzbar.

Die Häufigkeit von Filamentbrücken beim Spinnen und Strecken ist gegenüber üblichen Textilfasern nicht erhöht.

Das erhaltene Spinngut ist nicht spröde, läßt sich problemlos verstrecken und kristallisiert während einer kurzzeitigen, kontinuierlich durchführbaren Thermofixierung.

Die erfindungsgemäßen Fasern und Filamente lassen sich ohne Schwierigkeiten üblichen textilen Verarbeitungsprozessen unterwerfen.

Entsprechend der hohen Kristallinität zeichnen sich die erfindungsgemäßen Fasern und Filamente durch große Thermostabilität, niedrigen Koch- und Thermoschrumpf sowie sehr geringe Kriechneigung bei hohen Temperaturen aus. Weiterhin sind die erfindungsgemäßen Fasern und Filamente durch hohe Festigkeit, hohen Elastizitätsmodul und große Chemikalienbeständigkeit gekennzeichnet.

Die erfindungsgemäßen Fasern und Filamente eignen sich beispielsweise zur Herstellung von Schutzbekleidung, Vliesstoffen, beispielsweise für die Filtration und für elektrolytische Membranen.

Beispiel 1

Dieses Beispiel beschreibt zum Vergleich die Herstellung von Polyphenylensulfid gemäß US-PS 33 54 129.

In einem mit Rührer ausgerüsteten Autoklaven wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202 °C erwärmt. Dabei destillierten insgesamt 19 ml Wasser ab. Der Ansatz wurde anschließend auf ca. 160 °C heruntergekühlt und 147 g p-Dichlorbenzol (= 1 Mol) in ca. 50 g N-Methyl-2-pyrrolidon hinzugefügt. Man erwärmt das Reaktionsgemisch unter dem Stickstoffvordruck von 2,5 bar in 30 min auf 245 °C, wobei der Druck auf 10 bar ansteigt, und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen unterworfen wird.

Man trocknet bei 80 °C im Vakuum und erhält 100,3 g (93 %) Poly-p-phenylensulfid mit folgenden Kenndaten:
Schmelzviskosität $\mu m$ = 4,5 Pa.s (bei $\tau = 10^2$ Pa). Eine thermoplastische Verarbeitung ist ohne Härtung nicht möglich.

Beispiel 2

In einem 2-l-Dreihalskolben, der mit Thermometer, Rührer und Kolonne mit Destillatteiler ausgerüstet ist, werden unter Stickstoff 1110 g N-Methylcaprolactam, 323,5 g Natriumsulfidhydrat (= 2,45 Mol $Na_2S$), 2,4 g 50 %ige Natronlauge, 341,1 g 1,4-Dichlorbenzol (= 2,32 Mol), 28,53 g Natriumacetat und 5,07 g $\epsilon$-Aminocapronsäure (0,035 Mol) vorgelegt. Das Umsetzungsgemisch wird langsam zum Sieden erhitzt. Aus dem destillierenden Azetrop, bestehend aus Wasser und p-Dichlorbenzol, wird Wasser abgetrennt und p-Dichlorbenzol in das Reaktionsgefäß zurückgeführt. Nach 2 Std. ist sowohl im Destillat als auch im Sumpf kein Wasser mehr nachweisbar. Es wird weitere 9 Std. zum Rückfluß erhitzt und das Produkt in üblicher Weise durch Fällen in Wasser, Sauerstellen, Elektrolytfreiwaschen mit Wasser und Trocknen in Form einer weißen Faser isoliert. Die Charakterisierung erfolgt durch Bestimmung der Schmelzviskosität:

$\eta_m = 3,6 \times 10^2$ Pa.s (bei $\tau = 10^2$ Pa).

Beispiel 3

Wie Beispiel 2; jedoch werden dem Reaktionsgemisch 2,1 g 1,2,4-Trichlorbenzol (0,5 Mol-% bezogen auf die Mole Dihalogenbenzol) als Verzweiger hinzugefügt. Reaktion und Aufarbeitung analog Beispiel 2. Die Schmelzviskosität m = $1,8 \times 10^3$ Pa.s (bei $\tau = 10^2$ Pa).

Beispiel 4

Wie Beispiel 2; jedoch werden anstelle der $\epsilon$-Aminocapronsäure 4,09 g (0,035 Mol) $\delta$-Aminobuttersäure eingesetzt.

Die Schmelzviskosität $\eta_m = 3,2 \times 10^2$ Pa.s (bei $\tau = 10^2$ Pa).

Beispiel 5

Apparatur gemäß Beispiel 2. 1110 g N-Methylcaprolactam, 323,5 g Natriumsulfidhydrat (= 2,45 Mol), 28,0 g 50 %ige Natronlauge, 341,1 g 1,4-Dichlorbenzol (= 2,32 Mol), 2,52 g 1,2,4-Trichlorbenzol (0,5 Mol-%, bezogen auf die Mole p-Dihalgoenbenzol) und 30,2 g N,N-Dimethylacetamid (15 Mol-%) sowie 5,07 g (0,035 Mol) $\epsilon$-Aminocapronsäure. Das Umsetzungsgemisch wird langsam zum Sieden erhitzt. Aus dem destillierenden Azeotrop, bestehend aus Wasser und p-Dichlorbenzol, wird Wasser abgetrennt und p-Dichlorbenzol zurückgeführt. Nach 2 Stunden ist sowohl im Destillat als auch im Sumpf kein Wasser mehr nachweisbar. Es wird weitere 9 Std. zum Rückfluß erhitzt und das Produkt analog Beispiel 2 weiterverarbeitet.

$\eta_m = 2,3 \times 10^3$ Pa.s (bei $\tau = 10^2$ Pa).

Beispiel 6

Wie Beispiel 2, jedoch mit der Änderung, daß 33,64 g $\epsilon$-Aminocapronsäure eingesetzt werden und

Lösungen von *NMC und **DCB sowie Natriumsulfid-hydrat, ε-Caprolactam und Natriumacetat unter gleichzeitiger Entwässerung zusammengeführt werden. Weiterreaktion und Aufarbeitung analog Beispiel 2.

$\eta_m$ = 3,6 . $10^2$ Pa.s (bei $\tau$ = $10^2$ Pa).

Beispiel 7

Wie Beispiel 6, jedoch ohne Natriumacetat

m = 1,3 . $10^2$ Pa.s (bei $\tau$ = $10^2$ Pa)

Beispiel 8

Wie beispiel 6, jedoch werden anstelle von ε-Aminocapronsäure 17,4 g Glycin eingesetzt.

$\eta_m$ = 2,0 x $10^2$ Pa.s (bei $\tau$ = $10^2$ Pa).

Im Gegensatz zu Beispiel 1 sind alle p-Polyphenylensulfide der Beispiele 2 bis 8 direkt thermoplastisch verarbeitbar.

Ein nach DE-OS 32 43 189 gemäß Beispiel 2 hergestelltes p-Polyphenylensulfid (Entfernen des Wassers aus der Reaktion, keine Zugabe einer Aminosäure) zeigte sowohl vor als auch nach dem Aufschmelzen eine dunklere Farbe und beim Aufschmelzen eine stärkere Entwicklung saurer und damit korrosiv wirkender gasförmiger Bestandteile als solche p-Polyphenylensulfide, die erfindungsgemäß hergestellt wurden.

Das Aufschmelzen wrude bei 320 °C vorgenommen, die sauren Gase mit Stickstoff als Schleppgas in eine Waschflasche mit 1N Natronlauge überführt und die verbrauchte bzw. neutralisierte Natronlauge titrimetrisch bestimmt.

* N-Methylcaprolactam

** p-Dichlorbenzol

| | Farbe nach Fällung in $H_2O$ | Farbe nach Aufschmelzen 320° C | Verbrauch von ml 1 n NaOH nach 30' Aufschmelzen bei 320° C |
|---|---|---|---|
| * PPS gemäß Beispiel 2 der DOS 32 43 189 | grau-weiß | schwarz | 3,1 |
| PPS gemäß der vorliegenden Erfindung | | | |
| Beispiel 2 | weiß | bräunlich | 2,2 |
| Beispiel 6 | weiß | bräunlich | 2,1 |

* Polyphenylensulfid

Beispiel 9 (nicht erfindungsgemäß)

In einem 2 l-Dreihalskolben, der mit Thermometer, Rührrer und Kolonne mit Destillatteiler ausgerüstet ist, wurden unter Stickstoff 1110 g N-Methylcaprolactam, 305,2 g Natriumsulfid-trihydrat (= 2,32 Mol), 27,8

g 50 %ige Natronlauge (0,348 Mol), 341,1 g 1,4-Dichlorbenzol (= 2,32 Mol) und 2,1 g 1,2,4-Trichlorbenzol (0,5 mol-%, bezogen auf Mole Dichlorbenzol) vorgelegt.

Das Umsetzungsgemisch wird langsam zum Sieden erhitzt. Aus dem destillierten Azeotrop, bestehend aus Wasser und p-Dichlorbenzol, wird Wasser abgetrennt und p-Dichlorbenzol in das Reaktionsgemisch zurückgeführt. Nach 2 Stunden ist sowohl im Destillat als auch im Sumpf kein Wasser mehr nachweisbar. Es wird weitere 3 Stunden zum Rückfluß erhitzt und das Produkt in üblicher Weise isoliert. Man erhalt ein weißes PPS (Polyphenylensulfid) nach Fällung in Wasser, Neutralisation, $H_2O$-Wäsche und Trocknung mit einer Schmelzviskosität von $\eta_m$ = 1400 Pa.s (bei $10^2$ Pa gemessen).

Das p-Polyphenylensulfid des Beispiels 9 ist direkt thermoplastisch verarbeitbar.

Beispiel 10

In einem 2 l-Dreihalskolben, der mit Thermometer, Rührer und Kolonne mit Destillatteiler ausgerüstet ist, werden unter Stickstoff 1110 g N-Methylcaprolactam, 323,5 g Natriumsulfidhydrat (= 2,45 Mol), 28,0 g 50 %ige Natronlauge, 341,1 g 1,4-Dichlorbenzol (= 2,32 Mol) 4,21 g 1,2,4-Trichlorbenzol (1 Mol-%, bezogen auf Dichlorbenzol) und 30,2 g N,N-Dimethylacetamid (15 Mol-%, bezogen auf $Na_2S$) und 4,44 g (0,035 Mol) $\epsilon$-Caprolactam vorgelegt. Das Umsetzungsgemisch wird langsam zum Sieden erhitzt. Aus dem destillierenden Azeotrop, bestehend aus Wasser und p-Dichlorbenzol, wird Wasser abgetrennt und p-Dichlorbenzol in das Reaktionsgefäß zurückgeführt. Nach 2 Stunden ist sowohl im Destillat als auch im Sumpf kein Wasser mehr nachweisbar. Es wird weitere 9 Stunden zum Rückfluß erhitzt und das Produkt in üblicher Weise durch Fällen in Wasser, ansäuern, elektrolytfrei waschen mit Wasser und Trocknen als weiße Faser isoliert. Die Charakterisierung erfolgt durch die Schmelzviskosität $\eta_m$.

$\eta$m = 6,2 x $10^3$ Pa.s (bei $\tau$ = $10^2$ Pa).

Beispiel 11

Wie Beispiel 10, jedoch nur mit 1,68 g 1,2,4-Trichlorbenzol (0,4 Mol-%, bezogen auf Dichlorbenzol als Verzweiger) $\eta_m$ = 1,45 x $10^3$ Pa.s (bei $\tau$ = $10^2$ Pa).

Beispiel 12

In diesem Beispiel wurde auf den Einsatz des Verzweigers 1,2,4-Trichlorbenzol verzichtet.

$\eta_m$ = 3,2 x $10^2$ Pa.s (bei $\tau$ = $10^2$ Pa)

Beispiel 13

Wie Beispiel 10, jedoch wurden anstelle der 4,44 g $\epsilon$-Caprolactam 3,77 g Pyrrolidon eingesetzt. Es wurde ein weißes PPS mit einer Schmelzviskosität des ausgefällten p-Polyphenylensulfids:

$\eta_m$ = 5,8 x $10^3$ Pa.s (bei $\tau$ = $10^2$ Pa).

Beispiel 14

Wie Beispiel 10, jedoch wurde anstelle der 4,44 g $\epsilon$-Caprolactam 8,74 g Laurinlactam eingesetzt. $\eta_m$ des erhaltenen p-Polyphenylensulfids:

$\eta_m$ = 4,2 x $10^3$ Pa.s (bei $\tau$ = $10^2$ Pa).

Beispiel 15

Analog Beispiel 12: 1110 g N-Methylcaprolactam, 323,5 g Natriumsulfidhydrat (= 2,45 Mol) 2,4 g 50 %ige Natronlauge, 341,1 g 1,4-Dichlorbenzol (= 2,32 Mol) und 38,05 g Natriumacetat (= 20 Mol-% bezogen auf $Na_2S$) sowie 4,44 g (0,035 Mol) $\epsilon$-Caprolactam. Man erhält 233,4 g weißes Polyphenylensulfid mit einer Schmelzviskosität von $\eta$m = 3,0 x $10^2$ Pa.s (bei $\tau$ = $10^2$ Pa).

Beispiel 16

Wie Beispiel 15, jedoch mit 29,4 g $\epsilon$-Caprolactam und der Änderung, daß Lösungen von NMC (N-Methylcaprolactam) und DCB (Dichlorbenzol) sowie Natriumsulfid-hydrat, $\epsilon$-Caprolactam und Natriumacetat unter gleichzeitiger Entwässerung zusammengeführt werden. Schmelzviskosität $\eta_m$ = 3,5 x $10^2$Pa.s (bei $\tau$ = $10^2$ Pa).

Ein gemäß Beispiel 2 der DE-OS 32 43 189 hergestelltes p-Polyphenylensulfid (Entfernen des freien Wassers aus der Reaktion, keine Zugabe von Lactam) zeigte sowohl vor als auch nach dem Aufschmelzen eine dunklere Farbe und beim Aufschmelzen eine stärkere Entwicklung saurer korrosiv wirkender gasförmiger Bestandteile als solche p-Polyphenylensulfide, die gemäß Beispiel 15 und 16 erfindungsgemäß hergestellt werden. Das Aufschmelzen wrude bei 320 °C vorgenommen, die sauren Gase mit Stickstoff als Schleppgas in eine Waschflasche mit 1 N Natronlauge überführt und die verbrauchte bzw. neutralisierte Natronlauge titrimetisch bestimmt.

| | Farbe nach Fällung (in $H_2O$) | Farbe nach Aufschmelzen | Verbrauch von ml 1NNaOH nach 30' Aufschmelzen bei 320° C |
|---|---|---|---|
| PPS (Polyphenylensulfid) gemäß Beispiel 2 der DE-OS 3 243 189 | grau-weiß | schwarz | 3,1 |
| PPS gemäß der vorliegenden Erfindung | | | |
| Beispiel 15 | weiß | bräunlich | 2,4 |
| Beispiel 16 | weiß | bräunlich | 2,2 |

Beispiel 17

In einem 2-l-Dreihalskolben, der mit Thermometer, Rührer und Kolonne mit Destillatteiler ausgerüstet ist, werden unter Stickstoff 1.110 g N-Methylcaprolactam, 323,5 g Natriumsulfidhydrat (= 2,45 mol $Na_2S$),

2,4 g 50 %ige Natronlauge, 341,1 g 1,4-Dichlorbenzol (= 2,32 mol), 28,53 g Natriumacetat und 5,07 g ϵ-Aminocapronsäure (0,035 mol) vorgelegt. Das Umsetzungsgemisch wird langsam zum Sieden erhitzt. Aus dem destillierenden Azetrop, bestehend aus Wasser und p-Dichlorbenzol, wird Wasser abgetrennt und p-Dichlorbenzol in das Reaktionsgefäß zurückgeführt. Nach 2 Stunden ist sowohl im Destillat als auch im Sumpf kein Wasser mehr nachweisbar. Es wird weitere 9 Stunden zum Rückfluß erhitzt und das Produkt in üblicher Weise durch Fällen in Wasser, Sauerstellen, Elektrolytfreiwaschen mit Wasser und Trocknen in Form einer weißen Faser isoliert. Die Charakterisierung erfolgt durch Bestimmung der Schmelzviskosität:
$\eta$m = 3,6 x $10^2$ (bei $10^2$ Pa und 306 °C gemessen)
und des Gewichtsmittels des relativen Molekulargewichtes
$M_w$ = 68.000.

Beispiel 18

Apparatur gemäß Beispiel 17: 1.110 g N-Methylcaprolactam, 323,5 g Natriumsulfidhydrat (= 245 mol), 28,0 g 50 %ige Natronlauge, 341,1 g 1,4-Dichlorbenzol (= 2,32 mol), 30,2 g N,N-Dimethylacetamid (15 mol-%) sowie 5,07 g (0,035 mol) ϵ-Aminocapronsäure. Das Umsetzungsgemisch wird langsam zum Sieden erhitzt. Aus dem destillierenden Azeo trop, bestehend aus Wasser und p-Dichlorbenzol, wird Wasser abgetrennt und p-Dichlorbenzol zurückgeführt. Nach 2 Stunden ist sowohl im Destillat als auch im Sumpf kein Wasser mehr nachweisbar. Es wird weitere 9 Stunden zum Rückfluß erhitzt und das Produkt analog Beispiel 17 weiter verarbeitet.
$\eta$m = 300 Pa.s (bei $10^2$ Pa und 306 °C gemessen)
Gewichtsmittel des relativen Molekulargewichtes:
$N_w$ = 64.000

Beispiel 19

Wie Beispiel 17, jedoch mit der Änderung, daß 76,1 g (0,58 mol) ϵ-Aminocapronsäure und 344,6 g (2,61 mol) Natriumsulfidhydrat eingesetzt und mit Lösungen von N-Methylcaprolactam und p-Dichlorbenzol sowie Natriumsulfidhydrat und ϵ-Aminocapronsäure unter gleichzeitiger Entwässerung zusammengeführt werden. Weiterreaktion und Aufarbeitung analog Beispiel 17.
$\eta$m = 1.900 Pa.s (bei $10^2$ Pa und 306 °C gemesen)
Gewichtsmittel des relativen Molekulargewichtes:
$M_w$ = 109.000.

Beispiele 20-22

Die gemäß den Beispielen 20-22 hergestellten Polyphenylensulfide werden unter Verwendung eines Zweischneckenextruders (ZSK 32) bei Schmelztemperaturen zwischen 300 und 310 °C aus einer 400 mm breiten Breitschlitzdüse mit einer Spaltweite von 0,6 mm extrudiert. Die aus der Düse tretenden Schmelzen werden mittels eines Vierwalzenstuhles als 350 mm breite und 0,5 mm dicke Folien abgezogen. Da die Temperatur der ersten Abzugswalze, mit der die Polyphenylensulfidschmelzen in unmittelbare Berührung kommen, bei 30 °C liegt, werden amorphe Folien erhalten.

Aus diesen Folien werden Abschnitte mit den Abmessungen 300 x 300 mm in einen Streckrahmen gespannt und dann bei 75 °C zunächst in Extrusionsrichtung, dann quer zur Extrusionsrichtung im Verhältnis 1:5 verstreckt. Die Geschwindigkeit der Verstreckung beträgt 6 cm/s. Bei beiden Verstreckungsvorgängen ist das Auftreten je zweier paralleler Einschnürungen quer zu jeweiligen Verstreckrichtung zu beobachten, die erst am Ende der Verstreckvorgänge verschwinden.

Nach der Verstreckung sind die zuvor transparenten Folien opak. Ihre Dicke beträgt nur noch 0,04 mm.

Im Anschluß an den Verstreckvorgang werden die noch im Streckrahmen befindlichen Folien jeweils 20 Minuten lang auf 260 °C erhitzt.

Die im Anschluß daran gemessenen mechanischen Eigenschaften dieser Folien sind aus Tabelle 1 zu entnehmen.

| Folien aus Polyarylensulfid gemäß Beispiel | | 17 | 18 | 19 |
|---|---|---|---|---|
| Reißfestigkeit | längs<br>quer | 240<br>210 | 235<br>212 | 260 MPa<br>245 " |
| Dehnung beim Bruch | längs<br>quer | 1,0<br>1,2 | 0,9<br>1,1 | 1,1 %<br>1,3 % |

Mechanische Eigenschaften der erfindungsgemäß hergestellten Folien

Folienabschnitte, die jeweils 2 Stunden lang auf 240 °C erhitzt wurden, zeigen Nachschwindungen von weniger als 0,3 %.

Vergleichsbeispiel

Ein gerührter 1-l-Autoklav wurde mit 4,9 mol Natriumsulfid ($Na_2S \cdot 9H_2O$), 0,75 mol Natriumhydroxid, 4,0 mol Lithiumacetat ($CH_3COOLi \times 2H_2O$) und 2.00 ml N-Methyl-2-pyrrolidon beschickt. Das Gemisch wurde unter einer langsamen $N_2$-Spülung in 2 Stunden auf 200 °C erhitzt, um das Wasser abzudestillieren. Sodann wurde der Reaktor auf 170 °C gekühlt und 5,0 mol 1,4-Dichlorbenzol, und 0,01 mol 1,2,4-Trichlorbenzol wurden zugesetzt. Das resultierende System wurde unter 4 kg/cm$^2$ Stickstoffdruck verschlsosen und auf 270 °C erhitzt und 3 Stunden auf dieser Temperatur gehalten. Das resultierende pulverartige Polymer wurde mit heißem Wasser 5 mal und sodann 2 mal mit Aceton gewaschen und dann bei 70 °C in einem Vakuumofen getrocknet.

Die Ausbeute an Poly-p-phenylensulfid war 86 %. Es hatte eine Schmelzviskosität von 180 Pa.s bei 306 °C und 100 Pa.

Dieses Polyphenylensulfid wurde unter den in den Beispielen 20-22 genannten Bedingungen zu einer amorphen Folie von 350 mm Breite und 0,5 mm Dicke extrudiert. Die aufeinanderfolgende Verstreckung von Folienabschnitten der Abmessungen 300 x 300 mm gelang weder in Extrusionsrichtung noch quer dazu bei 75 °C, ohne daß die Folien rissen, und zwar auch nicht bei sehr niedrigen Verstreckgeschwindigkeiten (1cm/sec.), Die Verstreckungen waren erst bei 95 °C möglich, wobei jedoch keine Einschnürungen beobachtet wurden und die Folien transparent blieben. Nach der biaxialen Verstreckung im Verhältnis 1:5 in jeder Verstreckrichtung wurden die noch im Streckrahmen befindlichen Folien ebenfalls 20 Minuten lang auf 260 °C erhitzt.

Die im Anschluß daran gemessenen mechanischen Eigenschaften der biaxial verstreckten Vergleichsfolien sind in Tabelle 2 enthalten. Sie zeigen, daß die oberhalb der Glastemperatur des Polyphenylensulfids verstreckten Folien auch nach dem Tempern erheblich geringere Festigkeiten besitzen und sich unter Belastung weit mehr verformen.

Tabelle 2

| Folien gemäß Vergleichsbeispiel | | |
|---|---|---|
| Reißfestigkeit | längs<br>quer | 150 MPa<br>130 " |
| Dehnung beim Bruch | längs<br>quer | 35 %<br>45 % |

Beispiel 23

In einem 2 l-Dreihalskolben, der mit Thermometer, Rührer und Kolonne mit Destillatteiler ausgerüstet ist, werden unter Stickstoff 1110 g N-Methylcaprolactam, 323,5 g Natriumsulfidhydrat (= 2,45 mol $Na_2S$), 2,4 g 50 %ige Natronlauge, 341,1 g 1,4-Dichlorbenzol (= 2,32 mol) 28,53 g Natriumacetat und 5,07 g $\epsilon$-Aminocapronsäure (0,035 mol) vorgelegt. Das Umsetzungsgemisch wird langsam zum Sieden erhitzt. Aus dem destillierenden Azeotrop, bestehend aus Wasser und p-Dichlorbenzol, wird Wasser abgetrennt und p-Dichlorbenzol in das Reaktionsgefäß zurückgeführt. Nach 2 Stunden ist sowoh im Destillat als auch im

Sumpf kein Wasser mehr nachweisbar. Es wird weitere 9 Std. zum Rückfluß erhitzt und das Produkt in üblicher Weise durch Fällen in Wasser, Sauerstellen, Elektrolytfreiwaschen mit Wasser und Trocknen in Form einer fasrigen Masse isoliert. Die Charakterisierung erfolgt durch Bestimmung der Schmelzviskosität.

$\eta_m$ = 360 Pa.s (bei $10^2$ Pa und 306C° gemessen)

und das Gewichtsmittels des relativen Molekulargewichtes

$M_w$ = 68 000.

Beispiel 24

Apparatur gemäß Beispiel 23. 1110 g N-Methylcaprolactam, 323,5 g Natriumsulfidhydrat (= 2,45 mol), 28,0 g 50 %ige Natronlauge, 341,1 g 1,4-Dichlorbenzol (= 2,32 mol), 30,2 g N,N-Dimethylacetamid (15 mol-%) sowie 5,07 g (0,035 mol) $\epsilon$-Aminocapronsäure. Das Umsetzungsgemisch wird langsam zum Sieden erhitzt. Aus dem destillierenden Azeotrop, bestehend aus Wasser und p-Dichlorbenzol, wird Wasser abgetrennt und p-Dichlorbenzol zurückgeführt. Nach 2 Std. ist sowohl im Destillat als auch im Sumpf kein Wasser mehr nachweisbar. Es wird weitere 9 Std. zum Rückfluß erhitzt und das Produkt analog Beispiel 1 weiterverarbeitet.

$\eta_m$ = 300 Pa.s (bei $10^2$ Pa und 306°C gemessen)

Gewichtsmittel des relativen Molekulargewichtes:

$M_w$ = 64 000.

Beispiel 25

Wie Beispiel 23, jedoch mit der Änderung , daß 76,1 g (0,58 mol) $\epsilon$-Aminocapronsäure und 344,6 g (2,61 mol) Natriumsulfidhydrat eingesetzt und mit Lösungen von N-Methylcaprolactam und p-Dichlorbenzol sowie Natriumsulfidhydrat und $\epsilon$-Aminocapronsäure unter gleichzeitiger Entwässerung zusammengeführt werden. Weiterreaktion und Aufarbeitung analog Beispiel 23.

$\eta_m$ = 1900 Pa.s (bei $10^2$ Pa und 306°C gemessen).

Gewichtsmittel des relativen Molekulargewichtes:

$M_w$ = 109 000.

Beispiel 26

Ein gemäß Beispiel 24 hergestelltes Polymerisat mit einer Schmelzviskosität von 300 Pa.s bei 306°C wird mit einem Schmelzspinnextruder durch eine Einlochdüse mit 0,5 mm Durchmesser extrudiert. Die Abkühlung des Monofiles erfolgte in einem Wasserbad, der Abzug betrug 200 m/min. Die Verstreckung erfolgte zweistufig auf Kontaktheizern bei 95°C auf einen Gesamtstreckgrad von 5,3. Das so erhaltene Monofil wies folgende textile Daten auf:

| | |
|---|---|
| Titer | 23 dtex |
| Feinheitsfestigkeit | 3,2 cN/dtex |
| Reißdehnung | 13 % |
| Anfangsmodul | 39 cN/dtex |
| Kochschrumpf | 13 %. |

Die Röntgenweitwinkelstreuung an dieser Faser ergab eine hohe Orientierung, aber nur eine geringe Kristallinität.

Das Monofil wurde bei 260°C auf einer beheizten Galette unter Spannung mit einer Verweilzeit von zwei Minuten fixiert. Es ergaben sich folgende textile Daten:

| | |
|---|---|
| Titer | 24 dtex |
| Feinheitsfestigkeit | 3,3 cN/dtex |
| Reißdehnung | 17 % |
| Anfangsmodul | 44 cN/dtex |
| Kochschrumpf | < 0,2 % |
| Heißluftschrumpf 240 °C | < 0,2 % |

Ein Kriechversuch, bei dem 10 cm des Monofiles unter einer Last von 0,1 cN/dtex von Raumtemperatur auf 240 °C aufgeheizt und eine Stunde bei 240 °C gehalten wurde, ergab eine Dehnung von 1,2 % nach einer Stunde.

Die Röntgenweitwinkelstreuung an dieser Faser ergab eine hochorientiert-kristalline Struktur.

Nach einer spannungslosen Temperturbehandlung des fixierten Monofiles 24 h bei 240 °C in Luft ergaben sich noch folgende textile Daten:

| | |
|---|---|
| Feinheitsfestigkeit | 3,1 cN/dtex |
| Reißdehnung | 19 % |
| Anfangsmodul | 43 cN/dtex |

Die textilen Daten bleiben nach der Temperaturbehandlung nahezu unverändert.

Beispiel 27

Ein gemäß Beispiel 25 hergstelltes Polyphenylensulfid mit einer Schmelzviskosität von 1900 Pa.s bei 306 °C wurde mit einem Schmelzspinnextruder bei 330 °C durch eine Einlochdüse mit einem Lochdurchmesser von 0,5 mm versponnen, in Wasser abgekühlt und mit 200 m/min aufgespult. Das Monofil wurde dreistufig auf Kontaktheizern bei 95 °C und 120 °C auf einem Gesamtstreckgrad von 5,4 verstreckt und anschließend unter Spannung bei 275 °C und einer Verweilzeit von zwei Minuten thermofixiert. Es ergaben sich folgende textile Daten:

| | |
|---|---|
| Titer | 20 dtex |
| Feinheitsfestigkeit | 3,8 cN/dtex |
| Reißdehnung | 16 % |
| Anfangsmodul | 52 cN/dtex |
| Kochschrumpf | < 0,2 % |
| Heißluftschrumpf | < 0,2 % |

Der Kriechversuch 1 h bei 240 °C bei einer Last von 0,1 cN/dtex ergab eine Dehnung von 0,5 %.

Beispiel 28

Ein gemäß Beispiel 23 hergestelltes Polyphenylensulfid mit einer Schmelzviskosität von 360 Pa.s bei 306 °C wurde bei 295 °C durch eine Düse mit dreißig Bohrungen mit 0,25 mm Durchmesser und einer Kanallänge von 0,5 mm versponnen.

Der Düsenfilter bestand aus einem VA-Gewebe mit 16 000 Maschen/$cm^2$.

Die Abzugsgeschwindigkeit betrug 500 m/min. Das Spinngut wurde dreistufig (zweimal in siedendem Wasser, anschließend auf Kontaktheizer bei 135 °C) auf einen Gesamtstreckgrad von 7,1 verstreckt und anschließend bei 260 °C unter Spannung mit einer Verweilzeit von einer Minute fixiert.

Es ergaben sich folgende textile Daten:

| | |
|---|---|
| Titer | 2,4 dtex |
| Feinheitsfestigkeit | 4,1 cN/dtex |
| Reißdehnung | 11 % |
| Anfangsmodul | 55 cN/dtex |
| Kochschrumpf | < 0,2 % |
| Thermoschrumpf 240 ° C | < 0,2 % |

Der Kriechversuch nach 1 h bei 240 ° C und einer Last von 0,1 cN/dtex ergab eine Dehnung von 1 %.

Beispiel 29

Ein gemäß Beispiel 23 hergestelltes Polyphenylensulfid mit einer Schmelzviskosität von 360 Pa.s bei 306 ° C wurde bei 300 ° C durch eine Düse mit dreißig Bohrungen mit 0,25 mm Durchmesser und einer Kanallänge von 0,5 mm versponnen.

Das Düsenfilter bestand aus einem VA-Gewebe mit 25 000 Maschen/$cm^2$. Die Abzugsgeschwindigkeit betrug 1500 m/min. Das Spinngut wurde dreistufig (zweimal in siedendem Wasser, einmal bei 135 ° C auf Kontaktheizern) auf einen Gesamtstreckgrad von 7,5 verstreckt und anschließend bei 260 ° C unter Spannung mit einer Verweilzeit von einer Minute fixiert.

Es ergaben sich folgende textile Daten:

| | |
|---|---|
| Titer | 1,4 dtex |
| Feinheitsfestigkeit | 4,4 cN/dtex |
| Reißdehnung | 10 % |
| Anfangsmodul | 58 cN/dtex |
| Kochschrumpf | < 0,2 % |
| Thermoschrumpf | < 0,2 %. |

Der Kriechversuch nach 1 h bei 240 ° C unter einer Last von 0,1 cN/dtex ergab eine Dehnung von 1 %.

**Patentansprüche**

1. Polyarylensulfid mit einer Schmelzviskosität $\eta_m$ von 20 bis 500 000 Pa.s und einem Gewichtsmittel des relativen Molekulargewichts $M_w$ (rel) von 25 000 bis 380 000, dadurch gekennzeichnet, daß Schmelzviskosität $\eta_m$ und das Gewichtsmittel des relativen Molekulargewichts $M_w$ sich verhalten wie

   $$\lg \eta_m = 3.48 \,.\, \lg M_w (rel) - 14.25 \pm 0{,}1.$$

2. Polyarylensulfid nach Anspruch 1, dadurch gekennzeichnet, daß $\eta_m$ und $M_w$ sich verhalten wie:

   $$\lg \eta_m = 3.48 \,.\, \lg M_w (rel) - 14.25 \pm 0{,}05.$$

3. Verfahren zur Herstellung von hochmolekularen, gegebenenfalls verzweigten Polyarylensulfiden aus
   a) 50 - 100 Mol-% Dihalogenaromaten der Formel

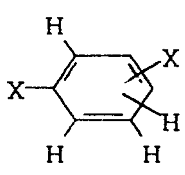

(I),

und 0 - 50 Mol-% Dihalogenaromaten der Formel

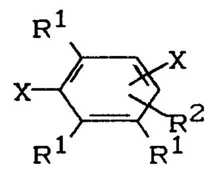

(II),

in denen

X für zueinander meta- oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist

und

b) 0 - 5 Mol-%, bevorzugt 0,1 - 2,5 Mol-%, bezogen auf die Summe der Dihalogenaromaten der Formel I und II, eines Tri- oder Tetrahalogenaromaten der Formel

$ArX_n$ (III),

wobei

A ein aromatischer $C_6$-$C_{14}$-Rest oder ein heterocyclischer Rest mit 5 bis 14 Ringatomen, wobei bis zu 3 Ring-C-Atome durch Heteroatome wie N, O, S ersetzt sein können, ist,

X für Halogen wie Chlor oder Brom steht und

n für die Zahl 3 oder 4 steht

und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a + b) : c im Bereich von 0,85:1 bis 1,15:1 liegen kann,

d) gegebenenfalls in Anwesenheit von Katalysatoren

e) in einem N-Alkyllactam von Aminosäuren mit 6-11 C-Atomen als polares Lösungsmittel, wobei das molare Verhältnis von a) zu c) im Bereich von 0,75:1 bis 1,2,5:1 und c) und e) im Bereich von 1:2 bis 1:15 liegt, die Reaktionszeit bis zu 24 Stunden, vorzugsweise bis zu 18 Std. beträgt und die Reaktionstemperturen zwischen 150 und 280 °C liegen, dadurch gekennzeichnet, daß

f) die Reaktion in Anwesenheit von 0,2 bis 100 Mol-% bezogen auf die Mole Dihalogenaromat, einer Aminosäure durchgeführt wird.

**4.** Verfahren nach Anspruch 3, dadurch gekennzeichnet, daß 0,2 bis 25 Mol-%, bezogen auf die Mole Dihalogenaromat, einer Aminosäure zugegeben wird.

**5.** Verfahren nach Anspruch 3, dadurch gekennzeichnet, daß aliphatische Aminosäuren eingesetzt werden.

**6.** Verfahren nach Anspruch 3, dadurch gekennzeichnet, daß Glycin, $\alpha$- und $\beta$-Alanin, $\gamma$-Aminobuttersäure, $\epsilon$-Aminocapronsäure, 11-Aminoundecansäure sowie deren N-methylierten Derivate eingesetzt werden.

**7.** Verfahren nach Anspruch 3, dadurch gekennzeichnet, daß die wasserhaltigen Reaktionsteilnehmer völlig entwässert werden und die Reaktion druckfrei bzw. druckarm durchgeführt wird.

**8.** Verfahren nach Anspruch 3, dadurch gekennzeichnet, daß die Reaktionspartner und das polare Lösungsmittel einzeln oder in Mischungen bzw. Lösungen bei Temperaturen $\geqq$ 200 °C unter gleichzeitiger Entwässerung zusammengeführt und zur Reaktion gebracht werden.

**9.** Verfahren nach Anspruch 3, dadurch gekennzeichnet, daß man N-Methyl-$\epsilon$-caprolactam als polares Lösungsmittel einsetzt.

**10.** Verfahren nach Anspruch 3, dadurch gekennzeichnet, daß 1,4-Dichlorbenzol als Dihalogenaromat der Formel (I) eingesetzt wird.

**11.** Verfahren nach Anspruch 3, dadurch gekennzeichnet, daß man 1,2,4-Trichlorbenzol als Polyhalogenaromat der Formel (III) einsetzt.

**12.** Verfahren zur Herstellung von hochmolekularen, gegegebenenfalls verzweigten Polyarylensulfiden aus
a) 50 - 100 Mol-% Dihalogenaromaten der Formel

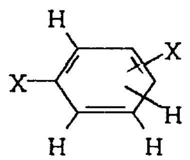

(I),

und 0 - 50 Mol-% Dihalogenaromaten der Formel

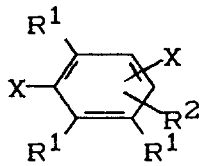

(II),

in denen

X für zueinander meta- oder para-ständiges Halogen wie Chlor oder Brom steht und

$R^1$ gleich oder verschieden ist und Wasserstoff, Alkyl, Cycloalkyl , Aryl, Alkylaryl sein kann, wobei zwei zueinander orthoständige Reste $R^1$ zu einem aromatischen oder heterocyclischen Ring verknüpft sein können und immer ein Rest $R^1$ verschieden von Wasserstoff ist

und

b) 0 - 5 Mol-%, bezogen auf die Summe der Komponenten a) und b) eines Tri- oder Tetrahalogenaromaten der Formel

$ArX_n$ (III),

wobei

Ar ein aromatischer oder ein heterocyclischer Rest ist,

X für Chlor oder Brom steht und

n 3 oder 4 ist

und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a + b) : c im Bereich von 0,5:1 bis 1,5:1, bevorzugt 0,75 bis 1,25:1, liegen kann,

e) in N-Alkyllactamen von Aminosäuren mit 6-11 C-Atomen oder cyclischen Harnstoffen als ein organisches Lösungsmittel,

dadurch gekennzeichnet, daß 0,5 bis 100 Mol-%, bezogen auf Mole Dihalogenaromat der Formel I und II eines Esters oder Anhydrids einer Carbonsäure der Reaktionsmischung zugesetzt werden.

**13.** Verfahren nach Anspruch 12, dadurch gekennzeichnet, daß Ester von $C_2$- bis $C_{18}$-aliphatischen bzw. $C_5$-$C_7$-cycloaliphatischen Carbonsäuren dem Reaktionsgemisch zugesetzt werden.

**14.** Verfahren nach Anspruch 12, dadurch gekennzeichnet, daß Anhydride vn $C_2$- bis $C_7$-aliphatischen und $C_5$-$C_7$-cycloaliphatischen Carbonsäuren dem Reaktionsgemisch zugesetzt werden.

**15.** Verfahren nach Anspruch 12, dadurch gekennzeichnet, daß alles Wasser aus dem Reaktionsgemisch mittels Azeotropbildner destilliert wird und anschließend druckfrei bzw. druckarm umgesetzt wird.

**16.** Verfahren nach Anspruch 12, dadurch gekennzeichnet, daß partiell entwässert wird und anschließend unter Druck umgesetzt wird.

**17.** Verfahren nach Anspruch 12, dadurch gekennzeichnet, daß man N-Methyl-ω-caprolactam als polares organisches Lösungsmittel einsetzt.

**18.** Verfahren nach Anspruch 12, dadurch gekennzeichnet, daß 1,4-Dichlorbenzol als Dihalogenaromat der Formel (I) eingesetzt wird.

**19.** Verfahren nach Anspruch 12, dadurch gekennzeichnet, daß man 1,2,4-Trichlorbenzol als Polyhalogenaromat der Formel (III) einsetzt.

**20.** Verfahren zur Herstellung von hochmolekularen, gegegebenenfalls verzweigten Polyarylsulfiden aus
a) 50 - 100 Mol-% Dihalogenaromaten der Formel

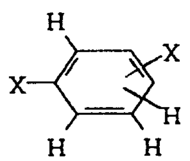

(I),

und 0 - 50 Mol-% Dihalogenaromaten der Formel

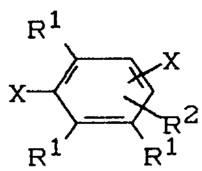

(II),

in denen

X für zueinander meta- oder para-ständiges Halogen steht und

$R^1$ gleich oder verschieden ist und Wasserstoff, Alkyl, Cycloalkyl, Aryl, Alkylaryl sein kann, wobei zwei zueinander orthoständige Reste $R^1$ zu einem aromatischen oder heterocyclischen Ring verknüpft sein können und immer ein Rest $R^1$ verschieden von Wasserstoff ist

und

b) 0 - 5 Mol-%, bezogen auf die Summe der Komponenten a) und b) eines Tri- oder Tetrahalogenaromaten der Formel

$ArX_n$ (III),

wobei

Ar ein aromatischer oder heterocyclischer Rest ist,

X für Halogen steht und

n für die Zahl 3 oder 4 steht und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit geringen Mengen Alkalihydroxiden wie Natrium- und Kaliumhydroxid, wobei das molare Verhältnis von (a + b) : c im Bereich von 0,85:1 bis 1,15:1 liegen kann,

d) gegebenenfalls in Anwesenheit von als reaktionsbeschleunigend bekannten Katalystoren,

dadurch gekennzeichnet, daß die Umsetzung in einem N-Alkyllactam von Aminosäuren mit 6-11 C-Atomen oder cyclischen Harnstoffen als polares Lösungsmittel, bevorzugt einem N-Alkyllactam,

das 0,5 bis 100 Mol-%, bezogen auf die Mole Dihalogenaromat, eines Lactams enthält, durchgeführt wird.

**21.** Verfahren nach Anspruch 20, dadurch gekennzeichnet, daß aliphatische Lactame eingesetzt werden.

**22.** Verfahren nach Anspruch 20, dadurch gekennzeichnet, daß $\epsilon$-Caprolactam eingesetzt wird.

**23.** Verfahren nach Anspruch 20, dadurch gekennzeichnet, daß die wasserhaltigen Reaktionsteilnehmer völlig entwässert werden und die Reaktion druckfrei bzw. druckarm durchgeführt wird.

**24.** Verfahren nach Anspruch 20, dadurch gekennzeichnet, daß zusätzlich 1 bis 100 Mol-% bevorzugt 1 bis 25 Mol-%, bezogen auf die Mole Alkalisulfid, N,N-Dialkylcarbonsäureamide eingesetzt werden.

**25.** Verfahren nach Anspruch 20, dadurch gekennzeichnet, daß die Reaktion über eine Batch- oder Konti-Fahrweise durchgeführt wird.

**26.** Verfahren nach Anspruch 20, dadurch gekennzeichnet, daß die Reaktionspartner und das polare Lösungsmittel einzeln oder in Mischungen bzw. Lösungen bei Temperaturen ≧ 200 °C unter gleichzeitiger Entwässerung zusammengeführt und zur Reaktion gebracht werden.

**27.** Verfahren nach Anspruch 20, dadurch gekennzeichnet, daß man N-Methyl-$\epsilon$-caprolactam als polares organisches Lösungsmittel einsetzt.

**28.** Verfahren nach Anspruch 20, dadurch gekennzeichnet, daß man 1,2,4-Trichlorbenzol als Polyhalogenaromat der Formel (III) einsetzt.

**29.** Folien aus Polyphenylsulfid, dadurch gekennzeichnet, daß ein Polyarylensulfid mit einer Schmelzviskosität qm von 20 bis 5000 Pa.s und einem Gewichtsmittel des relativen Molekulargewichts $M_w$ (rel) von 25.000 bis 500.000 verwendet wird, dessen Schmelzviskosität $\eta$m und das Gewichtsmittel des relativen Molekulargewichts $M_w$ (rel) sich verhalten wie

$$\lg \eta m = 3{,}48 \bullet \lg M_w (rel) - 14{,}25 \pm 0{,}1.$$

**30.** Folien nach Anspruch 29, dadurch gekennzeichnet, daß $\eta$m und $M_w$ (rel) sich verhalten wie

$$\lg \eta m = 3`48 \bullet \lg M_w (rel) - 14{,}25 \pm 0{,}05.$$

**31.** Mono- oder biaxial verstreckte Folien gemäß Anspruch 29, dadurch gekennzeichnet, daß zur Herstellung der Polyarylensulfide p-Dichlorbenzol, p-Dibrombenzol, 4,4'-Dichlordiphenylsulfon eingesetzt werden.

**32.** Fasern und Filamente aus Polyarylensulfiden, dadurch gekennzeichnet, daß Polyarylensulfide mit einer Schmelzviskosität $\eta_m$ von 20 bis 500 000 Pa.s und einem Gewichtsmittel des relativen Molekulargewichtes $M_w$ (rel) von 25 000 bis 500 000 verwendet werden, deren Schmelzviskosität $\eta_m$ und das Gewichtsmittel des relativen Molekulargewichts $M_w$ (rel) sich verhalten wie:

$$\lg \eta_m = 3{,}48 \times \lg M_w (rel) - 14{,}25 \pm 0{,}1.$$

**33.** Fasern und Filamente nach Anspruch 32, dadurch gekennzeichnet, daß $\eta_m$ und $M_w$ des Polyarylensulfids sich verhalten wie:

$$\lg \eta_m = 3{,}48 \times \lg M_w (rel) - 14{,}25 \pm 0{,}05.$$

**34.** Fasern und Filamente gemäß Anspruch 32, dadurch gekennzeichnet, daß zur Herstellung der Polyarylensulfide p-Dichlorbenzol, p-Dibrombenzol, 4,4'-Dichlordiphenylsulfon eingesetzt werden.

**35.** Fasern und Filamente gemäß Anspruch 32, dadurch gekennzeichnet, daß die Fasern nach der Verstreckung einem Fixierprozeß unterworfen werden.

## Claims

1. Polyarylene sulfide having a melt viscosity $\eta_m$ of 20 to 500,000 Pa.s and a weight average relative molecular weight $M_w$ (rel) of 25,000 to 380,000, characterized in that the melt viscosity $\eta_m$ and the weight average molecular weight $M_w$ are to one another as

$$\lg \eta_m = 3.48 \cdot \lg M_w (\text{rel}) - 14.25 \pm 0.1.$$

2. Polyarylene sulfide as claimed in claim 1, characterized in that $\eta_m$ and $M_w$ are to one another as:

$$\lg \eta_m = 3.48 \cdot \lg M_w (\text{rel}) - 14.25 \pm 0.05.$$

3. A process for the production of high molecular weight, optionally branched polyarylene sulfides from
   a) 50 to 100 mol-% aromatic dihalogen compounds corresponding to the formula

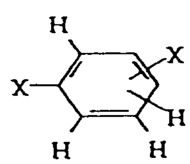

(I),

and 0 to 50 mol-% aromatic dihalogen compounds corresponding to the formula

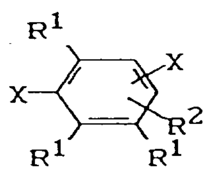

(II),

in which

the X's represent halogens, such as chlorine or bromine, in the meta position or para position to one another and

the R¹'s may be the same or different and represent hydrogen, $C_{1-4}$ alkyl, $C_{5-10}$ cycloalkyl, $C_{6-10}$ aryl, $C_{7-10}$ alkylaryl, $C_{7-14}$ arylalkyl; two substituents $R^1$ in the ortho position to one another may be attached to form an aromatic or heterocyclic ring containing up to 3 heteroatoms, such as N, O, S and one substituent $R^1$ is always different from hydrogen,

and

b) 0 to 5 mol-% and preferably 0.1 to 2.5 mol-%, based on the sum of the aromatic dihalogen compounds corresponding to formula I and II, of an aromatic trihalogen or tetrahalogen compound corresponding to the following formula

$ArX_n$ (III)

in which

A is an aromatic $C_{6-14}$ radical or a heterocyclic radical containing 5 to 14 ring atoms, up to 3 ring C atoms being replaceable by heteroatoms, such as N, O, S,

X represents halogen, such as chlorine or bromine, and

n is the number 3 or 4

and

c) alkali metal sulfides, preferably sodium or potassium sulfide or mixtures thereof, preferably in the form of their hydrates or aqueous mixtures, optionally together with small quantities of alkali metal hydroxides, such as sodium and potassium hydroxide, the molar ratio of (a + b):c being in the range from 0.85:1 to 1.15:1,

d) optionally in the presence of catalysts

e) in an N-alkyl lactam of $C_{6-11}$ amino acids as polar solvent,

the molar ratio of a) to c) being in the range from 0.75:1 to 1.25:1 and the molar ratio of c) to e) being in the range from 1:2 to 1:15, the reaction time being up to 24 hours and preferably up to 18 hours and the reaction temperatures being in the range from 150 to 280 °C,

characterized in that

f) the reaction is carried out in the presence of 0.2 to 100 mol-%, based on mols aromatic dihalogen compound, of an amino acid.

**4.** A process as claimed in claim 3, characterized in that 0.2 to 25 mol-%, based on mols aromatic dihalogen compound, of an amino acid is added.

**5.** A process as claimed in claim 3, characterized in that aliphatic amino acids are used.

**6.** A process as claimed in claim 3, characterized in that glycine, α- and β-alanine, γ-aminobutyric acid, ε-aminocaproic acid, 11-aminoundecanoic acid and N-methylated derivatives thereof are used.

**7.** A process as claimed in claim 3, characterized in that the water-containing reactants are completely freed from water and the reaction is carried out in the complete or substantial absence of pressure.

**8.** A process as claimed in claim 3, characterized in that the reactants and the polar solvent are combined and reacted individually or in the form of mixtures or solutions at temperatures ≧ 200 °C with simultaneous removal of water.

**9.** A process as claimed in claim 3, characterized in that N-methyl-ε-caprolactam is used as the polar solvent.

**10.** A process as claimed in claim 3, characterized in that 1,4-dichlorobenzene is used as the aromatic dihalogen compound corresponding to formula (I).

**11.** A process as claimed in claim 3, characterized in that 1,2,4-trichlorobenzene is used as the aromatic polyhalogen compound corresponding to formula (III).

**12.** A process for the production of high molecular weight, optionally branched polyarylene sulfides from

a) 50 to 100 mol-% aromatic dihalogen compounds corresponding to the following formula

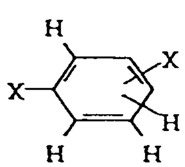

(I),

and 0 to 50 mol-% aromatic dihalogen compounds corresponding to the following formula

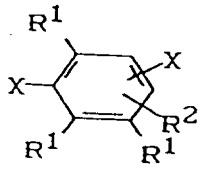

(II),

in which

| | |
|---|---|
| the X's | represent halogens, such as chlorine or bromine, in the meta position or para position to one another and |
| the R1's | may be the same or different and represent hydrogen, alkyl, cycloalkyl, aryl, alkylaryl; two substituents $R^1$ in the orthoposition to one another may be attached to form an aromatic or heterocyclic ring and one substituent $R^1$ is always different from |

hydrogen

and

b) 0 to 5 mol-%, based on the sum of components A) and B), of an aromatic trihalogen or tetrahalogen compound corresponding to the following formula

$ArX_n$ (III)

in which

Ar is an aromatic or heterocyclic radical,

X is chlorine or bromine and

n is 3 or 4

and

c) alkali metal sulfides, preferably sodium or potassium sulfide or mixtures thereof, preferably in the form of their hydrates or aqueous mixtures, optionally together with alkali metal hydroxides, such as sodium and potassium hydroxide, the molar ratio of (a + b) to c being in the range from 0.5:1 to 1.5:1 and preferably in the range from 0.75:1 to 1.25:1,

e) in N-alkyl lactams of $C_{6-11}$ amino acids or cyclic ureas as organic solvent,

characterized in that 0.5 to 100 mol-%, based on mols aromatic dihalogen compound corresponding to formulae I and II, of an ester or anhydride of a carboxylic acid is added to the reaction mixture.

**13.** A process as claimed in claim 12, characterized in that esters of aliphatic $C_{2-18}$ or cycloaliphatic $C_{5-7}$ carboxylic acids are added to the reaction mixture.

**14.** A process as claimed in claim 12, characterized in that anhydrides of aliphatic $C_{2-7}$ and cycloaliphatic $C_{5-7}$ carboxylic acids are added to the reaction mixture.

**15.** A process as claimed in claim 12, characterized in that all the water is distilled from the reaction mixture by entraining agents and the reaction is subsequently carried out in the complete or substantial absence of pressure.

**16.** A process as claimed in claim 12, characterized in that water is partly removed from the reaction mixture and the reaction is subsequently carried out under pressure.

**17.** A process as claimed in claim 12, characterized in that N-methyl-ω-caprolactam is used as the polar organic solvent.

**18.** A process as claimed in claim 12, characterized in that 1,4-dichlorobenzene is used as the aromatic dihalogen compound corresponding to formula (I).

**19.** A process as claimed in claim 12, characterized in that 1,2,4-trichlorobenzene is used as the aromatic polyhalogen compound corresponding to formula (III).

**20.** A process for the production of high molecular weight, optionally branched polyarylene sulfides from

a) 50 to 100 mol-% aromatic dihalogen compounds corresponding to the following formula

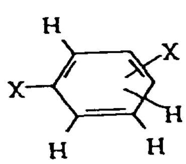

(I),

and 0 to 50 mol-% aromatic dihalogen compounds corresponding to the following formula

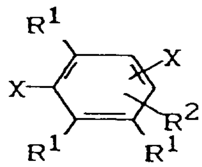 (II),

in which

the X's represent halogens in the meta position or para position to one another and

the $R^1$'s may be the same or different and represent hydrogen, alkyl, cycloalkyl, aryl, alkylaryl; two substituents $R^1$ in the orthoposition to one another may be attached to form an aromatic or heterocyclic ring and one substituent $R^1$ is always different from hydrogen

and

b) 0 to 5 mol-%, based on the sum of components A) and B), of an aromatic trihalogen or tetrahalogen compound corresponding to the following formula

$ArX_n$ (III)

in which

Ar is an aromatic or heterocyclic radical,

X is halogen and

n is the number 3 or 4

and

c) alkali metal sulfides, preferably sodium or potassium sulfide or mixtures thereof, preferably in the form of their hydrates or aqueous mixtures, optionally together with small quantities of alkali metal hydroxides, such as sodium and potassium hydroxide, the molar ratio of (a + b) to c being in the range from 0.85:1 to 1.15:1,

d) optionally in the presence of catalysts known to have a reaction-accelerating effect,

characterized in that the reaction is carried out in an N-alkyl lactam of $C_{6-11}$ amino acids or cyclic ureas as polar solvent, preferably an N-alkyl lactam, which contains 0.5 to 100 mol-%, based on mols aromatic dihalogen compound, of a lactam.

**21.** A process as claimed in claim 20, characterized in that aliphatic lactams are used.

**22.** A process as claimed in claim 20, characterized in that $\epsilon$-caprolactam is used.

**23.** A process as claimed in claim 20, characterized in that the water-containing reactants are completely freed from water and the reaction is carried out in the complete or substantial absence of pressure.

**24.** A process as claimed in claim 20, characterized in that 1 to 100 mol-% and preferably 1 to 25 mol-%, based on mols alkali metal sulfide, of N,N-dialkyl carboxylic acid amides are additionally used.

**25.** A process as claimed in claim 20, characterized in that the reaction is carried out in batches or continuously.

**26.** A process as claimed in claim 20, characterized in that the reactants and the polar solvents are combined and reacted individually or in the form of mixtures or solutions at temperatures $\geqq 200\,°C$ with simultaneous removal of water.

**27.** A process as claimed in claim 20, characterized in that N-methyl-$\epsilon$-caprolactam is used as the polar organic solvent.

**28.** A process as claimed in claim 20, characterized in that 1,2,4-trichlorobenzene is used as the aromatic polyhalogen compound corresponding to formula (III).

**29.** Films of polyphenylene sulfide, characterized in that the polyarylene sulfide used has a melt viscosity $\eta$m of 20 to 5,000 Pa.s and a weight average relative molecular weight $M_w$ (rel) of 25,000 to 500,000, the melt viscosity $\eta$m and the weight average relative molecular weight $M_w$ (rel) being to one another as

$$\lg \eta_m = 3.48 \cdot \lg M_w \text{ (rel)} - 14.25 \pm 0.1.$$

**30.** Films as claimed in claim 29, characterized in that $\eta$m and $M_w$ (rel) are to one another as

$$\lg \eta_m = 3.48 \cdot \lg M_w \text{ (rel)} - 14.25 \pm 0.05.$$

**31.** Monoaxially or biaxially stretched films as claimed in claim 29, characterized in that p-dichlorobenzene, p-dibromobenzene, 4,4'-dichlorodiphenyl sulfone are used for the production of the polyarylene sulfides.

**32.** Fibres and filaments of polyarylene sulfides, characterized in that the polyarylene sulfide used has a melt viscosity $\eta$m of 20 to 5,000 Pa.s and a weight average relative molecular weight $M_w$ (rel) of 25,000 to 500,000, the melt viscosity $\eta$m and the weight average relative molecular weight $M_w$ (rel) being to one another as

$$\lg \eta_m = 3.48 \times \lg M_w \text{ (rel)} - 14.25 \pm 0.1.$$

**33.** Fibres and filaments as claimed in claim 32, characterized in that $\eta$m and $M_w$ (rel) of the polyarylene sulfide are to one another as

$$\lg \eta_m = 3.48 \times \lg M_w \text{ (rel)} - 14.25 \pm 0.05.$$

**34.** Fibres and filaments as claimed in claim 32, characterized in that p-dichlorobenzene, p-dibromobenzene, 4,4'-dichlorodiphenyl sulfone are used for the production of the polyarylene sulfides.

**35.** Fibres and filaments as claimed in claim 32, characterized in that the fibres are subjected to a fixing process after stretching.

**Revendications**

**1.** Polyarylènesulfure ayant une viscosité à l'état fondu $\eta_m$ de 20 à 500.000 Pa.s et une moyenne pondérale du poids moléculaire relatif $M_w$ (rel) de 25.000 à 380.000, caractérisé en ce que la viscosité à l'état fondu $\eta_m$ et la moyenne pondérale du poids moléculaire relatif $M_w$ se comportent comme :

$$\lg \eta_m = 3,48 \,.\, \lg M_w \text{ (rel)} - 14,25 \pm 0,1.$$

**2.** Polyarylènesulfure selon la revendication 1, caractérisé en ce que $\eta_m$ et $M_w$ se comportent comme :

$$\lg \eta_m = 3,48 \,.\, \lg M_w \text{ (rel)} - 14,25 \pm 0,05.$$

**3.** Procédé pour la préparation de polyarylènesulfures à poids moléculaire élevé éventuellement ramifiés constitués par

a) de 50 à 100 moles % de composés aromatiques dihalogénés répondant à la formule

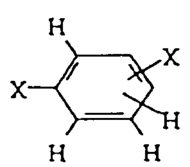

(I),

et de 0 à 50 moles % de composés aromatiques dihalogénés répondant à la formule

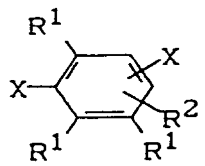

(II),

dans lesquelles

X représente des atomes d'halogène disposés mutuellement en position méta ou para, tels qu'un atome de chlore ou un atome de brome, et

$R^1$ est identique ou différent et peut représenter un atome d'hydrogène, un groupe alkyle en $C_1$-$C_4$, un groupe cycloalkyle en $C_5$-$C_{10}$, un groupe aryle en $C_6$-$C_{10}$, un groupe alkylaryle en $C_7$-$C_{10}$, un groupe arylalkyle en $C_7$-$C_{14}$, deux radicaux $R^1$ en position mutuelle ortho pouvant être reliés pour former un noyau aromatique ou hétérocyclique contenant jusqu'à trois hétéroatomes tels que N, O, S et toujours un radical $R^1$ étant différent d'un atome d'hydrogène

et

b) de 0 à 5 moles %, de préférence de 0,1 à 2,5 moles %, rapportées à la somme des composés aromatiques dihalogénés répondant à la formule I et à la formule II, d'un composé aromatique tri- ou tétra-halogéné répondant à la formule

$ArX_n$ (III)

dans laquelle

Ar représente un radical aromatique en $C_6$-$C_{14}$ ou un radical hétérocyclique contenant 5 à 14 atomes cycliques, jusqu'à trois atomes de carbone cycliques pouvant être remplacés par des hétéroatomes tels que N, O, S,

X représente un atome d'halogène tel qu'un atome de chlore ou un atome de brome et

n représente le nombre 3 ou 4

et

c) des sulfures de métaux alcalins, de préférence le sulfure de sodium ou le sulfure de potassium ou encore leur mélange, de préférence sous forme de leurs hydrates ou de leurs mélanges aqueux, éventuellement conjointement avec des quantités minimes d'hydroxydes de métaux alcalins tels que l'hydroxyde de sodium et l'hydroxyde de potassium, le rapport molaire de (a + b) : c pouvant se situer dans le domaine de 0,85:1 à 1,25:1,

d) éventuellement en présence de catalyseurs,

e) dans un N-alkyl-lactame d'amino-acides contenant de 6 à 11 atomes de carbone, comme solvant polaire, le rapport molaire entre a) et c) se situant dans le domaine de 0,75:1 à 1,25:1 et entre c) et e) dans le domaine de 1:2 à 1:15, le temps réactionnel s'élevant jusqu'à 24 heures, de préférence jusqu'à 18 heures et les températures réactionnelles se situant entre 150 et 280 °C, caractérisé en ce que

f) on effectue la réaction en présence de 0,2 à 100 moles % d'un amino-acide, rapportées aux moles du composé aromatique dihalogéné.

**4.** Procédé selon la revendication 3, caractérisé en ce qu'on ajoute de 0,2 à 25 moles % d'un amino-acide, rapportées aux moles du composé aromatique dihalogéné.

**5.** Procédé selon la revendication 3, caractérisé en ce qu'on met en oeuvre des amino-acides aliphatiques.

**6.** Procédé selon la revendication 3, caractérisé en ce qu'on met en oeuvre la glycine, l'$\alpha$- et $\beta$-alanine, l'acide $\gamma$-aminobutyrique, l'acide $\epsilon$-aminocaproique, l'acide 11-aminoundécanoïque, ainsi que leurs dérivés N-méthylés.

**7.** Procédé selon la revendication 3, caractérisé en ce qu'on déshydrate complètement les partenaires réactionnels contenant de l'eau et on effectue la réaction sans pression ou sous faible pression.

**8.** Procédé selon la revendication 3, caractérisé en ce qu'on réunit les partenaires réactionnels et le solvant polaire individuellement ou en mélanges ou encore en solutions à des températures ≧ 200 °C avec déshydratation simultanée, et on les amène à réagir.

**9.** Procédé selon la revendication 3, caractérisé en ce qu'on met en oeuvre le N-méthyl-ϵ-caprolactame comme solvant polaire.

**10.** Procédé selon la revendication 3, caractérisé en ce qu'on met en oeuvre le 1,4-dichlorobenzène comme composé aromatique dihalogéné de formule (I).

**11.** Procédé selon la revendication 3, caractérisé en ce qu'on met en oeuvre le 1,2,4-trichlorobenzène comme composé aromatique polyhalogéné de formule (III).

**12.** Procédé pour la préparation de polyarylènesulfures à poids moléculaire élevé éventuellement ramifiés constitués par :

a) de 50 à 100 moles % de composés aromatiques dihalogénés répondant à la formule

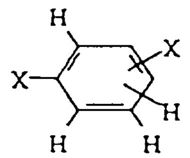

(I),

et de 0 à 50 moles % de composés aromatiques dihalogénés répondant à la formule

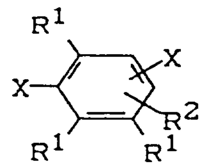

(II),

dans lesquelles

X représente des atomes d'halogène disposés mutuellement en position méta ou para, tels qu'un atome de chlore ou un atome de brome, et

$R^1$ est identique ou différent et peut représenter un atome d'hydrogène, un groupe alkyle, un groupe cycloalkyle, un groupe aryle, un groupe alkylaryle, deux radicaux $R^1$ en position mutuelle ortho pouvant être reliés pour former un noyau aromatique ou hétérocyclique et toujours un radical $R^1$ étant différent d'un atome d'hydrogène

et

b) de 0 à 5 moles %, rapportées à la somme des composés a) et b), d'un composé aromatique tri- ou tétra-halogéné répondant à la formule

$ArX_n$ (III)

dans laquelle

Ar représente un radical aromatique ou un radical hétérocyclique,

X représente un atome de chlore ou un atome de brome et

n représente 3 ou 4

et

c) des sulfures de métaux alcalins, de préférence le sulfure de sodium ou le sulfure de potassium ou encore leur mélange, de préférence sous forme de leurs hydrates ou de leurs mélanges aqueux, éventuellement conjointement avec des hydroxydes de métaux alcalins tels que l'hydroxyde de sodium et l'hydroxyde de potassium, le rapport molaire de (a + b) : c pouvant se situer dans le domaine de 0,5:1 à 1,5:1, de préférence de 0,75:1 à 1,25:1

d) dans des N-alkyl-lactames d'amino-acides contenant de 6 à 11 atomes de carbone ou dans des urées cycliques comme solvant organique,

caractérisé en ce qu'on ajoute au mélange réactionnel de 0,5 à 100 moles % d'un ester ou d'un anhydride d'un acide carboxylique, rapportées aux modes du composé aromatique dihalogéné de formules (I) et (II).

**13.** Procédé selon la revendication 12, caractérisé en ce qu'on ajoute au mélange réactionnel des esters d'acides carboxyliques aliphatiques en $C_2$-$C_{18}$ ou cycloaliphatiques en $C_5$-$C_7$.

**14.** Procédé selon la revendication 12, caractérisé en ce qu'on ajoute au mélange réactionnel des anhydrides d'acides carboxyliques aliphatiques en $C_2$-$C_7$ et cycloaliphatiques en $C_5$-$C_7$.

**15.** Procédé selon la revendication 12, caractérisé en ce qu'on distille toute l'eau hors du mélange réactionnel au moyen d'un formateur d'azéotrope et ensuite, on amène à réagir sans pression ou sous faible pression.

**16.** Procédé selon la revendication 12, caractérisé en ce qu'on déshydrate partiellement et ensuite, on fait réagir sous pression.

**17.** Procédé selon la revendication 12, caractérisé en ce qu'on met en oeuvre le N-méthyl-ω-caprolactame comme solvant organique polaire.

**18.** Procédé selon la revendication 12, caractérisé en ce qu'on met en oeuvre le 1,4-dichlorobenzène comme composé aromatique dihalogéné de formule (I).

**19.** Procédé selon la revendication 12, caractérisé en ce qu'on met en oeuvre le 1,2,4-trichlorobenzène comme composé aromatique polyhalogéné de formule (III).

**20.** Procédé pour la préparation de polyarylsulfures à poids moléculaire élevé éventuellement ramifiés, constitués par :

a) de 50 à 100 moles % de composés aromatiques dihalogénés répondant à la formule

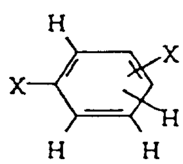

(I),

et de 0 à 50 moles % de composés aromatiques dihalogénés répondant à la formule

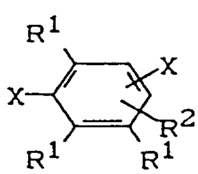

(II),

dans lesquelles

X représente des atomes d'halogène disposés mutuellement en position méta ou para et

$R^1$ est identique ou différent et peut représenter un atome d'hydrogène, un groupe alkyle, un groupe cycloalkyle, un groupe aryle, un groupe alkylaryle, deux radicaux $R^1$ en position mutuelle ortho pouvant être reliés pour former un noyau aromatique ou hétérocyclique et toujours un radical $R^1$ étant différent d'un atome d'hydrogène

et

b) de 0 à 5 moles %, rapportées à la somme des composés a) et b), d'un composé aromatique tri- ou tétra-halogéné répondant à la formule

$ArX_n$ (III)

dans laquelle
- Ar représente un radical aromatique ou un radical hétérocyclique,
- X représente un atome d'halogène et
- n représente le nombre 3 ou 4

et

c) des sulfures de métaux alcalins, de préférence le sulfure de sodium ou le sulfure de potassium ou encore leur mélange, de préférence sous forme de leurs hydrates ou de leurs mélanges aqueux, éventuellement conjointement avec des quantités minimes d'hydroxydes de métaux alcalins tels que l'hydroxyde de sodium et l'hydroxyde de potassium, le rapport molaire de (a + b) : c pouvant se situer dans le domaine de 0,85:1 à 1,15:1,

d) éventuellement en présence de catalyseurs connus pour accélérer la réaction,

caractérisé en ce qu'on effectue la réaction dans un N-alkyl-lactame d'amino-acides contenant de 6 à 11 atomes de carbone ou dans des urées cycliques comme solvant polaire, de préférence un N-alkyl-lactame

qui contient de 0,5 à 100 moles % d'un lactame, rapportées aux moles du composé aromatique dihalogéné.

**21.** Procédé selon la revendication 20, caractérisé en ce qu'on met en oeuvre des lactames aliphatiques.

**22.** Procédé selon la revendication 20, caractérisé en ce qu'on met en oeuvre l'$\epsilon$-caprolactame.

**23.** Procédé selon la revendication 20, caractérisé en ce qu'on déshydrate complètement les partenaires réactionnels contenant de l'eau et on effectue la réaction sans pression ou sous faible pression.

**24.** Procédé selon la revendication 20, caractérisé en ce qu'on met en oeuvre en outre de 1 à 100 moles %, de préférence de 1 à 25 moles % d'amides d'acides N,N-dialkylcarboxyliques, rapportées aux moles du sulfure de métal alcalin.

**25.** Procédé selon la revendication 20, caractérisé en ce qu'on effectue la réaction en recourant à une technique opératoire par lots ou en continu.

**26.** Procédé selon la revendication 20, caractérisé en ce qu'on réunit les partenaires réactionnels et le solvant polaire individuellement ou en mélanges ou encore en solutions à des températures $\geqq 200\,^\circ C$ avec déshydratation simultanée, et on les amène à réagir.

**27.** Procédé selon la revendication 20, caractérisé en ce qu'on met en oeuvre le N-méthyl-$\epsilon$-caprolactame comme solvant polaire.

**28.** Procédé selon la revendication 20, caractérisé en ce qu'on met en oeuvre le 1,2,4-trichlorobenzène comme composé aromatique polyhalogéné de formule (III).

**29.** Feuilles en polyphénylènesulfure, caractérisées en ce qu'on utilise un polyarylènesulfure présentant une viscosité à l'état fondu $\eta_m$ de 20 à 5.000 Pa.s et une moyenne pondérale du poids moléculaire relatif $M_w$ (rel) de 25.000 à 500.000, dont la viscosité à l'état fondu $\eta_m$ et dont la moyenne pondérale du poids moléculaire relatif $M_w$ (rel) se comportent comme

$$\lg \eta_m = 3{,}48 \;.\; \lg M_w\,(\text{rel}) - 14{,}25 \pm 0{,}1.$$

**30.** Feuilles selon la revendication 29, caractérisées en ce que $\eta_m$ et $M_w$ (rel) se comportent comme

$$\lg \eta_m = 3{,}48 \;.\; \lg M_w\,(\text{rel}) - 14{,}25 \pm 0{,}05.$$

**31.** Feuilles étirées en direction mono- ou bi-axiale selon la revendication 29, caractérisées en ce qu'on met en oeuvre, pour la préparation des polyarylènesulfures, le p-dichlorobenzène, le p-dibromobenzène et la 4,4'-dichlorodiphénylsulfone.

**32.** Fibres et filaments en polyarylènesulfures, caractérisés en ce qu'on utilise des polyarylènesulfures présentant une viscosité à l'état fondu $\eta_m$ de 20 à 500.000 Pa.s et une moyenne pondérale du poids moléculaire relatif $M_w$ (rel) de 25.000 à 500.000, dont la viscosité à l'état fondu $\eta_m$ et dont la moyenne pondérale du poids moléculaire relatif $M_w$ (rel) se comportent comme

$$\lg \eta_m = 3{,}48 \,.\, \lg M_w \text{ (rel)} - 14{,}25 \pm 0{,}1.$$

**33.** Fibres et filaments selon la revendication 32, caractérisés en ce que $\eta_m$ et $M_w$ (rel) du polyarylènesulfure se comportent comme

$$\lg \eta_m = 3{,}48 \,.\, \lg M_w \text{ (rel)} - 14{,}25 \pm 0{,}05.$$

**34.** Fibres et filaments selon la revendication 32, caractérisés en ce qu'on met en oeuvre, pour la préparation des polyarylènesulfures, le p-dichlorobenzène, le p-dibromobenzène et la 4,4'-dichlorodiphénylsulfone.

**35.** Fibres et filaments selon la revendication 32, caractérisés en ce qu'on soumet les fibres après l'étirage à un processus de fixation.